# EUROPÄISCHE PATENTSCHRIFT

(11) **EP 1 682 683 B1**
(45) Veröffentlichungstag und Bekanntmachung des Hinweises auf die Patenterteilung: **02.01.2008**
(21) Anmeldenummer: 04790831.4
(22) Anmeldetag: 26.10.2004
(51) Int. Cl.: C13D 3/06, C13D 3/12

(54) **VERFAHREN ZUR REDUZIERUNG DES KALKVERBRAUCHES BEI DER ZUCKERRÜBEN-SAFTREINIGUNG**
METHOD FOR REDUCING THE LIME CONSUMPTION DURING SUGAR-BEET JUICE CLEANING
PROCEDE DE REDUCTION DE LA CONSOMMATION DE CHAUX LORS DU LAVAGE DE JUS DE BETTERAVE A SUCRE

(30) Priorität: 30.10.2003 DE 10350672
(43) Veröffentlichungstag der Anmeldung: 26.07.2006
(73) Patentinhaber: Südzucker Aktiengesellschaft Mannheim/Ochsenfurt, 68165 Mannheim (DE)
(72) Erfinder: DENEUS, Eric, B-3001 Heverlee (BE); MERKEL, Gunter, 67551 Worms (DE); MICHELBERGER, Thomas, 67269 Grünstadt (DE); AJDARI RAD, Mohsen, 67283 Obrigheim (DE); WILLEMS, Mark, B-3300 Tienen (BE)
(74) Vertreter: Schwahn, Hartmut
(86) Internationale Anmeldenummer: PCT/EP2004/012046
(87) Internationale Veröffentlichungsnummer: WO 2005/042787

(56) Entgegenhaltungen:
- WO-A-99/24623
- GB-A- 2 136 446
- US-A- 3 806 364
- US-A- 4 009 706
- US-A- 4 288 551
- DATABASE WPI Section Ch, Week 199841 Derwent Publications Ltd., London, GB; Class D17, AN 1998-479717 XP002317956 & RU 2 105 817 C1 (UVAROSAKHAR STOCK CO) 27. Februar 1998 (1998-02-27)

## Beschreibung

Die vorliegende Erfindung betrifft ein verbessertes Verfahren zur Extraktreinigung von Zuckerrüben-Rohsaft, insbesondere ein Verfahren zur Reduzierung des Kalkverbrauches während der Extraktreinigung von Zuckerrüben-Rohsaft, ein Verfahren zur Herstellung eines nährstoffreichen Nicht-Saccharose-Konzentrates aus Zuckerrüben-Rohsaft, das so hergestellte Nicht-Saccharosestoff-Konzentrat, Verwendungen des Nicht-Saccharosestoff-Konzentrates sowie eine Vorrichtung zur Vorkalkung von Zuckerrüben-Rohsaft und/oder zur Gewinnung des Nicht-Saccharosestoff-Konzentrates.

RU2105817 C1 beschreibt die Vorkalkung des Rohsaftes durch Zugabe von Kalkmilch und Polyacrylamid sowie die Abtrennung und die Hauptkalkung mit Carbonat-Ionen.

US3806364 A beschreibt die Flocculation durch Zugabe von Polyacrylamid, Vorkalkung des Rohsaftes durch Zugabe von Kalkmilch sowie die Abtrennung und die Hauptkalkung mit Carbonat-Ionen.

Herkömmlicherweise wird Zucker aus Rüben gewonnen, indem die geernteten Rüben zunächst gereinigt werden, wobei sie von einem Großteil der noch anhaftenden Erde sowie von Blattresten befreit werden. Nach Passieren einer Wäsche werden die Rüben durch Schneidemaschinen zu bleistiftstarken Schnitzeln gehobelt. Aus den Schnitzeln erfolgt die Zuckergewinnung durch Gegenstrom-Extraktion unter Verwendung von heißem, leicht angesäuertem Wasser mit einem pH-Wert von etwa 5,5 bis 5,8. Durch das Ansäuern der Extraktionsflüssigkeit wird die Filtration des Zuckerrüben-Rohsaftes sowie die Abpressbarkeit der extrahierten Schnitzel begünstigt. Der bei der Extraktion gewonnene Zuckerrüben-Rohsaft wird anschließend einer Extraktreinigung zugeführt. Üblicherweise erfolgt die Extraktreinigung mit Hilfe der sogenannten Kalk-Kohlensäure-Extraktreinigung in Form einer Vorkalkung und Hauptkalkung sowie einer ersten und zweiten Carbonatation und der Abtrennung des Niederschlages nach der ersten und zweiten Carbonatation. Die Extraktreinigung hat die Aufgabe, die im Zuckerrüben-Rohsaft enthaltenen Nicht-Saccharose-stoffe, insbesondere hochmolekulare Stoffe, weitestgehend zu entfernen. Die zu entfernenden Nichtsaccharose-Stoffe sollen dabei möglichst nicht abgebaut werden, so dass keine zusätzlichen niedermolekularen Stoffe in den Extrakt oder Zuckerrüben-Rohsaft gelangen.

In der Vorkalkung wird der Zuckerrüben-Rohsaft unter schonenden Bedingungen schrittweise durch Zugabe von Kalkmilch alkalisiert. Dabei wird der pH-Wert des Zuckerrüben-Rohsaftes im Vorkalkungsreaktor stufenweise auf etwa 11,5 angehoben. Die vorkalkung erfolgt unter Zugabe definierter Mengen an Calciumhydroxid (Kalkmilch), wobei die Alkalität des Saftes am Ende der Vorkalkung etwa 0,1 bis 0,3 g CaO/100 ml Zuckerrüben-Rohsaft beträgt. Infolge der Alkalisierung des Zuckerrüben-Rohsaftes kommt es zu einer Neutralisierung der im Extrakt vorhandenen organischen und anorganischen Säuren sowie zu Ausfällungsreaktionen der Anionen, die mit Calcium unlösliche oder schwer lösliche Salze bilden. So werden beispielsweise Phosphat, Oxalat, Citrat und Sulfat weitestgehend abgeschieden. Darüber hinaus koagulieren kolloidal gelöste Nicht-Saccharosestoffen und werden ausgefällt. Die Ausfällung einzelner Inhaltsstoffe, beispielsweise von Anionen wie Oxalat, Phosphat, Citrat, Sulfat oder von Kolloiden wie Pektin und Eiweißstoffen, erfolgt innerhalb bestimmter pH-Bereiche. Innerhalb dieser pH-Bereiche findet gleichzeitig eine Verdichtung des Niederschlages statt. Durch die Zugabe von Kalkmilch während der Vorkalkung kommt es auch zu einer Koagulation von Proteinen.

Die Aufgabe der anschließend durchgeführten Hauptkalkung besteht insbesondere im chemischen Abbau von Invertzucker und Säureamiden, der andernfalls im Bereich der Safteindickung unter Bildung von Säuren ablaufen würde. In der Hauptkalkung wird die Temperatur auf etwa 85°C angehoben und die Alkalität des Zuckerrüben-Rohsaftes wird durch die Zugabe von Kalkmilch deutlich erhöht, nämlich auf etwa 0,8 bis 1,1 g CaO/100 ml Saft. Die in der Hauptkalkung angestrebten Prozesse laufen im klassischen Verfahren nur unter derart drastischen Bedingungen ab. Der in der Hauptkalkung im Überschuss zugesetzte Kalk spielt auch bei der ersten und zweiten Carbonatation eine große Rolle. Durch Umsetzung zu Calciumcarbonat wird ein starkes Adsorptionsmittel für eine Reihe löslicher Nicht-Saccharosestoffe und auch ein geeignetes Filterhilfsmittel bereitgestellt. Der im Hauptkalkungsprozess nicht verbrauchte Kalk wird durch Einleiten von Kohlendioxid als Carbonatationsgas in den beiden Carbonatationsschritten zu Calciumcarbonat umgesetzt. Die Carbonatation erfolgt in zwei Stufen. In der ersten Stufe der Carbonatation erfolgt eine Gaseinleitung bis zu einem pH-Wert von etwa 11,2 bis 10,6, was einer Alkalität von 0,10 bis 0,06 g CaO/100 ml Filtrat der ersten Carbonatation entspricht. Bei der ersten Carbonatation werden die ausgefällten und ausgeflockten Nicht-Saccharosestoffe und ein Teil der im Zuckerrüben-Rohsaft enthaltenen Farbstoffe adsorbtiv an das gebildete Calciumcarbonat gebunden. Der in der ersten Carbonatation erhaltene sogenannte erste Schlammsaft wird über Eindickfilter (Kerzenfilter) filtriert oder Dekanteure geleitet und dabei zu Schlammsaftkonzentrat eingedickt. Dabei werden die ausgefällten und ausgeflockten, an Calciumcarbonat gebundenen Nicht-Saccharosestoffe aus dem Saft entfernt. Üblicherweise schließt sich an die erste Carbonatation eine Nachkalkung an, wobei der Saft mit etwas Kalkmilch versetzt wird und dann in der zweiten Carbonatation weiter carbonatiert wird. Auch in der zweiten Carbonatationsstufe wird Carbonatationsgas zugeführt, wobei die einzustellende Alkalität, die sogenannte optimale Alkalität bei 0,025 bis 0,010 g CaO/100 ml Filtrat der zweiten Carbonatation liegt. Die Alkalität entspricht einem pH-Wert von etwa 9,0 bis 9,30. In der zweiten Carbonatation entsteht der sogenannte zweite Schlammsaft, welcher ebenfalls über Eindickfilter filtriert und dabei eingedickt wird. Die über die Eindickfilter in der ersten und zweiten Carbonatation aufkonzentrierten Calciumcarbonat-Schlämme (Schlammsaftkonzentrate) werden üblicherweise vereinigt und über Membranfilterpressen abgepresst. Dabei entsteht der sogenannte Carbokalk. Dieser Carbokalk ist ein lagerfähiges Produkt mit einem Trockensubstanzgehalt von mehr als 70 % und wird als Düngemittel verwendet. Üblicherweise wird ein Teil des Schlammsaftkonzentrates zur Vorkalkung zurückgeführt.

Der in der Extraktreinigung gereinigte Zuckerrüben-Rohsaft, der auch als Dünnsaft bezeichnet wird und etwa 15 bis 17 % Zucker enthält, wird dann zu einem Dicksaft mit etwa 65 bis 70 % Zucker eingedickt und dann in Kristallisatoren solange eingedampft, bis sich eine zähe Masse, die sogenannte Kochmasse, mit etwa 85 % Zucker bildet. Durch Zentrifugieren dieser Masse wird dann schließlich Weißzucker erhalten.

Ein erheblicher Nachteil der herkömmlichen Kalk-Kohlensäure-Extraktreinigung besteht insbesondere darin, dass nur ein relativ geringer Reinigungseffekt erreicht wird, da nur maximal 40 % aller Nicht-Saccharosestoffe aus dem Zuckerrüben-Rohsaft entfernt werden. Ein weiterer Nachteil besteht darin, dass das Verfahren sehr große Mengen von Kalk erfordert, wobei die verbrauchte Menge von Kalk etwa 2,5 % des Gesamtgewichtes der verarbeiteten Zuckerrüben ausmachen kann. Die Herstellung des im Kalk-Kohlensäure-Extraktreinigungsverfahren verwendeten Kalkes und die Beseitigung des bei der Branntkalk-Herstellung entstehenden Abfalls sind jedoch relativ teuer. Auch sind die CO₂-Emissionen aus Kalkofen und Saftreinigungsanlage sehr hoch. Darüber hinaus lässt sich der bei dem Kalk-Kohlendioxid-Extraktreinigungsverfahren anfallende Carbokalk, der aus Kalk und abgetrennten Saft-Verunreinigungen besteht, lediglich als Düngemittel einsetzen.

Der vorliegenden Erfindung liegt daher das technische Problem zugrunde, ein verbessertes Verfahren zur Extraktreinigung von Zuckerriiben-Rohsaft bereitzustellen, wobei insbesondere der Kalkverbrauch für die Extraktreinigung reduziert wird.

Die Erfindung wird am besten durch die Ansprüche beschrieben.

Die vorliegende Erfindung löst das ihr zugrunde liegende technische Problem insbesondere durch Bereitstellung eines Verfahrens zur Extraktreinigung von Zuckerrüben-Rohsaft, umfassend die folgenden sequentiell durchzuführenden Verfahrensschritte:
a) Vorkalkung des Zuckerrüben-Rohsaftes durch Zugabe von Kalkmilch bis eine Konzentration von etwa 0,1 bis 0,3 g CaO/100 ml Zuckerrüben-Rohsaft erreicht ist zur Fällung und/oder Koagulation von Nicht-Saccharosestoffen in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel bis zu einer Konzentration von 1 bis 8 ppm,
c) Abtrennung des Koagulats vom Vorkalkungssaft unter Verwendung mindestens einer ersten Abtrennvorrichtung unter Erhalt eines klaren Vorkalkungssaftes,
d) Hauptkalkung des nach Abtrennung des Koagulats erhaltenen klaren Vorkalkungssaftes durch Zugabe von Kalkmilch bis eine Konzentration von etwa 0,6 g CaO/100 ml im Vorkalkungssaft erreicht ist, und
e) Durchführung einer ersten Carbonatation durch Einleitung von Kohlendioxid in den Hauptkalkungssaft und gegebenenfalls anschließende Durchführung einer zweiten Carbonatation.

Die Schritte a) und b) können in einer besonderen Ausführungsform der Erfindung auch simultan durchgeführt werden.

Das erfindungsgemäße Verfahren sieht also vor, dass die Vorkalkung an sich in im wesentlichen identischer Weise zu den bisher üblichen Vorkalkungs-Verfahren durchgeführt wird. Im Gegensatz zu den üblichen Verfahren werden die während der Vorkalkung gefällten oder koagulierten Nicht-Saccharosestoffe jedoch bereits nach der Vorkalkung abgetrennt und nicht, wie üblicherweise, erst nach der ersten und zweiten Carbonatation. Erfindungsgemäß werden außer Kalkmilch und dem genannten polyanionischen Flockungsmittel, das kein Koagulationsmittel, sondern ein Flocculationsmittel ist, keine weiteren Flockungs- oder Koagulationsmittel verwendet.

Da der Zuckerrüben-Rohsaft bereits nach der Vorkalkung durch die Abtrennung der ausgefällten und ausgeflockten Nicht-Saccharosestoffe deutlich reiner ist, ergeben sich zahlreiche Vorteile für die Weiterverarbeitung des Zuckerrüben-Rohsaftes. Insbesondere muss dem erfindungsgemäß geklärten Vorkalkungssaft bei der Hauptkalkung erheblich weniger Kalkmilch als bei herkömmlichen Kalk-Kohlensäure-Extraktreinigungsverfahren zugegeben werden. Während bei herkömmlichen Verfahren die Alkalität des Saftes in der Hauptkalkung auf etwa 0,8 bis 1, 1 g CaO/100 ml Saft erhöht werden muss, erfordert das erfindungsgemäße Verfahren lediglich eine Erhöhung der Alkalität auf etwa 0,6 g CaO/100 ml Saft. Darüber hinaus kann im Gegensatz zu herkömmlichen Verfahren die anmeldungsgemäße Vorkalkung ohne die übliche Rückführung von Schlammsaftkonzentrat aus der Carbonatationsstufe in die Vorkalkung durchgeführt werden. Auch ist es im Gegensatz zu herkömmlichen Verfahren nicht mehr erforderlich, dass der Zuckerrüben-Rohsaft nach der ersten Carbonatationsstufe nachgekalkt werden muss. Das erfindungsgemäße Extrakt-Reinigungsverfahren zeichnet sich also in vorteilhafter Weise durch einen deutlich reduzierten Kalkverbrauch aus. Das erfindungsgemäße Verfahren führt somit zu einer deutlichen Kostenreduzierung der Zuckerrüben-Rohsaftreinigung, nicht zuletzt auch deshalb, weil die erforderlichen Anlagen für die Gewinnung von Branntkalk erheblich verkleinert werden können.

Die erfindungsgemäße Verfahrensweise wird besonders durch die Verwendung von ausgewählten Flockungsmitteln ermöglicht, die unter den gegebenen Verfahrensbedingungen ohne Zusatz von weiteren Hilfsstoffen, wie Koagulationsmitteln, eine besonders effiziente Extraktreinigung von Zuckerrübenrohrsaft ermöglichen. Überraschenderweise stellte sich erfindungsgemäß nämlich heraus, dass bei Einsatz von ganz bestimmten polyanionischen Flockungsmitteln, nämlich anionischen Coplymeren aus Acrylamid und Natriumacrylat mit einer Molmasse von etwa 5 Mio. bis etwa 22 Mio., insbesondere AN 945, 2440 und 2540, in einer Menge von 1 bis 8 ppm die vorgenannte effiziente Reinigung gewährleistet ist. ppm wird in der vorliegenden Lehre, wenn nicht anders angegeben, als ppm Gew./Gew. (w/w) (gewichtsbezogen) verstanden.

Aufgrund der wesentlich geringeren Verunreinigung mit abgeschiedenem Calciumcarbonat verbessert sich die Filtrierbarkeit der unter Verwendung des anmeldungsgemäßen Verfahrens erhaltenen Schlammsäfte, insbesondere des ersten Schlammsaftes in erheblichem Maße. Versuche der Anmelderin im Technikum-Maßstab haben gezeigt, dass der Filtrationskoeffizient der erfindungsgemäß erhaltenen Schlammsäfte deutlich unter 0,5 s/cm² liegt, während die Filtrationskoeffizienten der unter Verwendung herkömmlicher Extrakt-Reinigungsverfahren erhaltenen Schlammsäfte bei 1 bis 3 s/cm² liegen. Die erfindungsgemäß verbesserten Filtrationseigenschaften der Schlammsäfte und die erfindungsgemäße Reduzierung der Menge an gebildetem Calciumcarbonat führt also auch dazu, dass die in den Carbonatationsstufen benötigten Kapazitäten an Eindickfiltern und Membranfilterpressen erfindungsgemäß ebenfalls erheblich verringert werden können.

Das erfindungsgemäße Verfahren zur Reinigung von Zuckerrüben-Rohsaft ist darüber hinaus in vorteilhafter Weise auch zur Verarbeitung von Rübenmaterial mit schlechter Qualität, insbesondere alterierter Rüben geeignet. Ein weiterer erheblicher Vorteil des erfindungsgemäßen Verfahrens besteht ferner darin, dass durch die Abtrennung der in der Vorkalkung ausgefällten und ausgeflockten Nicht-Saccharosestoffe ein neues Produkt bei der Zuckergewinnung entsteht, das sich durch einen hohen Anteil an Phosphat auszeichnet und das deshalb insbesondere als Futtermittelbestandteil, aber auch als Düngemittel eingesetzt werden kann. Erfindungsgemäß verbessert sich auch die Qualität des bei der Abpressung des Schlammsaftkonzentrates anfallenden Carbokalks, insbesondere im Hinblick auf dessen Verwendung als Düngemittel. Der erfindungsgemäß erhaltene Carbokalk zeichnet sich gegenüber dem Carbokalk, der unter Verwendung herkömmlicher Kalk-Kohlensäüre-Extraktreinigungsverfahren erhalten wird, durch einen wesentlich höheren Gehalt an Calciumcarbonat und einen erheblich verringerten Gehalt an Kolloiden aus. Der unter Verwendung des erfindungsgemäß erhaltenen Verfahrens erhaltene Carbokalk ist insbesondere arm an Phosphat. In einigen europäischen Regionen bestehen Probleme mit der Überdüngung der Ackerböden insbesondere mit Phosphat. Der erfindungsgemäß erhaltene Carbokalk kann daher insbesondere in solchen Böden als Bodenverbesserer eingesetzt werden.

Nicht zuletzt führt das erfindungsgemäße Verfahren auch zu einer deutlichen Reduzierung von CO₂-Emissionen aus Kalkofen und Extraktreinigungsanlage. Angesichts einer sich immer mehr verschärfenden Umwelt-Gesetzgebung mit Einführung einer Kohlendioxid-Steuer ist dies äußerst vorteilhaft.

Unter einer "Vorkalkung" wird die Zugabe von Kalkmilch zu Zuckerrüben-Rohsaft oder Zuckerrübenextrakt bis etwa 0,1 bis 0,3 g CaO/100 ml Zuckerrüben-Rohsaft verstanden. Bei der Vorkalkung wird der Zuckerrüben-Rohsaft unter schonenden Bedingungen alkalisiert, wobei der pH-Wert des Zuckerrüben-Rohsaftes von etwa 6 auf etwa 11,5 angehoben wird.

Die Vorkalkung dient zur Ausflockung von Nicht-Saccharosestoffen wie Pektin und Proteinen und zur Ausfällung schwerlöslicher Calciumsalze.

Im Zusammenhang mit der vorliegenden Erfindung wird unter "Zuckerrüben-Rohsaft" oder "Zuckerrübenextrakt" der Saft verstanden, der aus Schnitzeln durch Gegenstromextraktion bei etwa 65 bis 75°C im sogenannten Diffusionsverfahren extrahiert wird. Dieser zuckerreiche Zuckerrüben-Rohsaft enthält neben Zucker noch verschiedene organische und anorganische Bestandteile der Rübe, die als Nicht-Saccharosestoffe oder Nicht-Zuckerstoffe bezeichnet werden.

Im Zusammenhang mit der vorliegenden Erfindung werden unter den im Zuckerrüben-Rohsaft enthaltenen "Nicht-Saccharosestoffen" oder "Nicht-Zuckerstoffen" hochmolekulare Substanzen wie Eiweißstoffe, Polysaccharide und Zellwandbestandteile sowie niedrigmolekulare organische Verbindungen wie anorganische oder organische Säuren, Aminosäuren und mineralische Stoffe verstanden. Bei den Zellwandbestandteilen handelt es sich insbesondere um Pektine, Lignin, Cellulose und Hemicellulose. Diese Stoffe liegen ebenso wie die Eiweiße, zu denen neben Proteinen insbesondere Nucleoproteide gehören, als hydrophile Makromoleküle in kolloidal-disperser Form vor. Bei den organischen Säuren handelt es sich beispielsweise um Lactate, Citrate und Oxalate. Bei den anorganischen Säuren handelt es sich insbesondere um Sulfate und Phosphate.

Unter "Kalkmilch" wird erfindungsgemäß insbesondere Calciumhydroxid verstanden, das bei der stark exothermen Reaktion von gebranntem Kalk (Calciumoxid) mit Wasser gebildet und bei der Vorkalkung und Hauptkalkung als Kalkungsmittel eingesetzt wird. Die Zugabe von Kalkmilch zum Zuckerrüben-Rohsaft in der Vorkalkung bewirkt die Fällung oder Koagulation von Nicht-Saccharosestoffen in Form eines Koagulates.

Erfindungsgemäß werden unter einem "Koagulat" die aufgrund eines Flockungsprozesses gebildeten Zusammenballungen der im Zuckerrüben-Rohsaft vorhandenen Nicht-Saccharosestoffe verstanden, die auch als eiweißhaltige Fraktion aus der Vorkalkung bezeichnet werden. Das Koagulat umfasst insbesondere die unlöslichen oder schwer löslichen Salze, die sich durch Reaktion der Anionen von organischen oder anorganischen Säuren mit Calcium bilden, und die ausgefällten hochmolekularen Zuckerrüben-Rohsaft-Bestandteile, insbesondere mit hydrophilem Charakter, wie Eiweißstoffe, Polysaccharide und Zellwandbestandteile, die normalerweise im Zuckerrüben-Rohsaft kolloidal-dispers verteilt sind. Der Flockungsprozess wird in eine Flocculation, bei der die Aggregation durch Adsorption brückenbildender Polymere erfolgt, und eine Koagulation, bei der die Aggregation durch Abbau beziehungsweise Reduzierung von Abstoßungskräften erfolgt, unterteilt. Die Flockungsgeschwindigkeit ist von der Temperatur, dem pH-Wert und der Art der Zugabe der Kalkmilch abhängig. Die Zufuhr mechanischer Energie, beispielsweise beim Rühren und Schütteln, thermischer Energie, beispielsweise durch Temperaturerhöhung, elektrischer Energie etc. kann die Flockung oder Koagulation beschleunigen. Die Ausfällung einzelner Saft-Inhaltsstoffe, beispielsweise Anionen wie Oxalat, Phosphat, Citrat und Sulfat sowie Kolloide wie Pektin und Eiweiß, erfolgt in bestimmten pH-Bereichen, wobei innerhalb dieser pH-Bereiche eine Verdichtung des Niederschlages stattfindet. Der pH-Wert, bei dem eine Maximalmenge an Kolloiden ausgeflockt wird und die Fällung unlöslicher Kalksalze nahezu vollständig ist, wird als optimaler Flockungspunkt der Vorkalkung bezeichnet. Erfolgt die Ausfällung am optimalen Flockungspunkt, kommt es zu einer einheitlichen stabilen Ausflockung kolloidal-disperser hochmolekularer Saft-Bestandteile.

Die Fällung und Koagulation von Pektinen und Proteinen erfordert eine bestimmte temperaturabhängige Verweilzeit. Erfindungsgemäß ist vorgesehen, dass die Vorkalkung sowohl als kalte als auch als warme Vorkalkung durchgeführt werden kann. Vorzugsweise wird die kalte Vorkalkung bei einer Vorkalkungstemperatur von etwa 38 bis 40°C durchgeführt. Ein Vorteil der kalten Vorkalkung besteht in einem farbverbessernden Effekt beim Dünnsaft, einem niedrigeren Gehalt an Nicht-Saccharosestoffen, einem effektiveren Invertzucker-Abbau und einem insgesamt höheren Extrakt-Reinigungseffekt. Erfindungsgemäß besteht jedoch auch die Möglichkeit, die Zugabe der Kalkmilch zum Zuckerrüben-Rohsaft als warme Vorkalkung bei einer Temperatur des Zuckerrüben-Rohsaftes von 55°C bis 75°C durchzuführen. Eine warme Vorkalkung hat gegenüber der kalten Vorkalkung insbesondere den Vorteil, dass der behandelte Zuckerrüben-Rohsaft weniger mikrobielle Kontaminationen aufweist.

Die Zugabe von Kalkmilch zur Vorkalkung des Zuckerrüben-Rohsaftes erfolgt erfindungsgemäß bevorzugt als progressive Vorkalkung. Die progressive Vorkalkung durch eine allmähliche Steigerung der Alkalität beziehungsweise des pH-Wertes des Zuckerrüben-Rohsaftes erfolgt vorzugsweise durch langsamen Zulauf des Kalkmilch-Kalkungsmittel oder durch kleine unterbrochene Kalkmilch-Einzelzugaben, wobei insbesondere das pH-Optimum langsam durchlaufen wird. Die Vorteile der progressiven Vorkalkung sind unter anderem eine Verbesserung der Filtrationseigenschaften des behandelten Saftes, eine hellere Dicksaftfarbe und eine Vermeidung der Überalkalisierung. Darüber hinaus ermöglicht die progressive Vorkalkung eine kontinuierliche Arbeitsweise.

Erfindungsgemäß ist ebenfalls vorgesehen, dass die progressive Alkalisierung des Zuckerrüben-Rohsaftes während der Vorkalkung im Gegenstrom durch einen bereits alkalisierten Zuckerrüben-Rohsaft, beispielsweise mittels des Schlammsaftkonzentrats aus den Carbonatationsstufen, erfolgen kann. Die progressive Alkalisierung im Gegenstrom bedeutet, dass der zurückgeführte Saft höherer Alkalität so schnell wie möglich mit einem Saft niedrigerer Alkalität vermischt wird, ohne dass sich innerhalb der Mischzone unterschiedliche Alkalitätsgradienten aufbauen können. Unter Verwendung geeigneter Transportsysteme im Vorkalkungsapparat wird innerhalb des Systems dafür gesorgt, dass die erforderliche Rückführmenge mit hoher Konstanz entgegen der Hauptströmungsrichtung geführt wird.

Gemäß der Erfindung ist vorgesehen, nach der Vorkalkung und vor dem Abtrennen des gebildeten Koagulates dem Vorkalkungssaft mindestens ein Copolymer aus Acrylamid und Natriumacrylat mit einer Molmasse von etwa 5 Mio. bis etwa 22 Mio. als polyanionisches Flockungsmittel bis zu einer Konzentration von 1 bis 8 ppm zuzusetzen. Im Zusammenhang mit der vorliegenden Erfindung wird unter einem "Flockungsmittel" ein Stoff verstanden, der das Zeta-Potential von Teilchen in kolloidalen Suspensionen so beeinflusst, dass sie zu Flocken aggregieren und beispielsweise nach Sedimentation aus dem System entfernt werden können. Flockungsmittel müssen daher die elektrostatische Abstoßung der im Wasser meist negativ aufgeladenen Partikel überwinden. Erfindungsgemäß kann es sich bei den Flockungsmitteln auch um Flockungshilfsmittel oder Sedimentationsbeschleuniger handeln. Unter "Flockungshilfsmitteln" oder "Sedimentationsbeschleunigern" werden im Zusammenhang mit der vorliegenden Erfindung Verbindungen verstanden, die die Zusammenballung von Feststoffpartikeln zu größeren Einheiten oder Flocken bewirken. Durch die Zusammenballung als Flocken können sich die Feststoffe aufgrund ihrer größeren Masse bedeutend schneller absetzen. Gleichzeitig werden die Poren zwischen den einzelnen Teilchen vergrößert, so dass sich das Wasser, dass sich im abgesetzten Schlamm befindet, leicht durch Filtration oder Zentrifugation entfernen lässt. Die erfindungsgemäß eingesetzten polyanionischen Flockungsmittel haben keinerlei koagulierende Wirkung, da sie nicht die Dispersion der Teilchen in der flüssigen Phase beeinflussen, sondern die Aggregation der Teilchen durch Absorption brückenbildender Polymere bewirken.

Bei den erfindungsgemäß als polyanionische Flockungsmittel eingesetzten Copolymeren aus Acrylamid und Natriumacrylat handelt es sich um synthetische organische wasserlösliche Polyelektrolyte mit einem relativ großen Molekulargewicht von etwa 5 Mio. bis etwa 22 Mio. Diese Verbindungen sind mittel- bis starkionisch. Besonders bevorzugt werden als Flockungsmittel die Produkte 2440 und 2540 (Fa. Stockhausen) sowie AN 945 (Fa. Clarflok) eingesetzt.

Erfindungsgemäß ist vorgesehen, nach einer ausreichenden Verweilzeit das während der Vorkalkung und gegebenenfalls unter Verwendung eines Flockungsmittels gebildete Koagulat vom Vorkalkungssaft unter Verwendung einer Trenn- oder Abtrennvorrichtung abzutrennen. Unter einer "Abtrennvorrichtung" oder "Trennvorrichtung" wird erfindungsgemäß insbesondere eine Vorrichtung zur Fest/Flüssig-Trennung verstanden. Der Fest/Flüssig-Trennung liegen mechanische Verfahren zugrunde, die auf der Ausnutzung von Schwerkraft, Zentrifugalkraft, Druck oder Vakuum beruhen. Zu den Fest/Flüssig-Trennverfahren, auf denen die Wirkungsweise einer erfindungsgemäß verwendeten Abtrennvorrichtung beruhen, gehören beispielsweise Dekantieren, Filtration, Sedimentation, Klären und Zentrifugation.

In einer bevorzugten Ausführungsform der Erfindung wird als erste Abtrennvorrichtung ein Dekanteur oder Dekanter, insbesondere ein statischer oder dynamischer Dekanter verwendet. Unter einem "Dekanter" oder "Dekanteur", insbesondere statischen oder dynamischen Dekanter, wird eine Vorrichtung oder ein Apparat verstanden, der zur mechanischen Entfernung von sedimentierten Stoffen aus einer Flüssigkeit nach dem Sedimentationsprinzip mit Hilfe der Schwerkraft dient. Erfindungsgemäß ist insbesondere vorgesehen, dass unter Verwendung des Dekanteurs die nach der Vorkalkung ausgefällten oder ausgeflockten Nicht-Saccharose-stoffe vom Vorkalkungssaft so getrennt werden, dass sich am Unterlauf des Dekanteurs ein Volumenteil Schlamm, bezogen auf neunzehn Volumenteile Vorkalkungssaft, absetzt. Bei Rückführung von Schlammsaftkonzentrat aus den Carbonatationsstufen in die Vorkalkung ist erfindungsgemäß vorgesehen, dass unter Verwendung des Dekanteurs die nach der Vorkalkung ausgefällten oder ausgeflockten Nicht-Saccharosestoffe vom Vorkalkungssaft so getrennt werden, dass sich am Unterlauf des Dekanteurs ein Volumenteil Schlamm, bezogen auf neunzehn Volumenteile Vorkalkungssaft, absetzt.

Erfindungsgemäß ist insbesondere in einer bevorzugten Ausführung vorgesehen, dass bei Verwendung eines Dekanters als erster Abtrennvorrichtung dem Vorkalkungssaft 1 bis 3 ppm Flockungsmittel zugesetzt werden.

In einer weiteren bevorzugten Ausführungsform der Erfindung wird als erste Abtrennvorrichtung eine Zentrifuge verwendet. Unter einer Zentrifuge wird eine Vorrichtung zum Trennen von Stoffgemischen durch Ausnutzung der Fliehkraft verstanden. Das im Inneren der rotierenden Zentrifuge befindliche Trenngut wird der sogenannten Zentrifugalkraft ausgesetzt. Vorzugsweise handelt es sich bei der als ersten Abtrennvorrichtung verwendeten Zentrifuge um eine Tellerzentrifuge oder um eine Dekanterzentrifuge. Unter einer "Tellerzentrifuge" oder einem "Tellerseparator" wird erfindungsgemäß eine Zentrifuge mit rotierenden konischen Schleuderblechen verstanden, an denen die schwereren Komponenten nach außen geleitet werden, während sich die leichteren Komponenten in Achsennähe sammeln, von wo sie nach außen abgeleitet werden. Unter einer "Dekantierzentrifuge" wird erfindungsgemäß eine meist konische und häufig kontinuierlich arbeitende Schneckenaustrag-Zentrifuge verstanden.

Erfindungsgemäß ist insbesondere vorgesehen, dass dem Vorkalkungssaft 1 bis 8 ppm Flockungsmittel zugesetzt werden, z. B. bei Verwendung einer Tellerzentrifuge oder Dekanterzentrifuge als erster Abtrennvorrichtung.

In einer weiteren bevorzugten Ausführungsform der Erfindung ist vorgesehen, dass das unter Verwendung der ersten Abtrennvorrichtung vom klaren Vorkalkungssaft abgetrennte Koagulat unter Verwendung einer zweiten Abtrennvorrichtung weiter aufkonzentriert und eingedickt wird, wobei eine zweite Abtrennvorrichtung eingesetzt wird.

Erfindungsgemäß bevorzugt erfolgt die weitere Eindickung und Aufkonzentrierung des Koagulates unter Verwendung einer oder mehrerer Membranfilterpresse(n)(vertikaler Kuchenaustrag) oder einem oder mehreren Pressfilterautomaten (horizontaler Kuchenaustrag) als zweiter Abtrennvorrichtung. Im Zusammenhang mit der vorliegenden Erfindung wird unter einer "Membranfilterpresse" eine Filtervorrichtung verstanden, die entweder als Rahmenfilterpresse oder als Kammerfilterpresse ausgeführt ist. Eine als Rahmenfilterpresse ausgeführte Membranfilterpresse besteht aus einer Vielzahl rechtwinkliger, senkrecht stehender, kannelierter und parallel geschalteter Platten, die mit Membranen belegt sind oder als Membranfilter ausgeführt sind, und dazwischen liegenden Rahmen zur Aufnahme des Filterkuchens. Eine als Kammerfilterpresse ausgeführte Membranfilterpresse besteht aus einer Vielzahl von Membranfilterplatten, deren starker Rand gegenüber der eigentlichen Filterfläche hervorsteht, so dass sich zwischen zwei solchen Platten eine Kammer zur Aufnahme des Filterkuchens bildet. Bei der Eindickung und Aufkonzentrierung des Koagulates unter Verwendung einer Membranfilterpresse wird durch Abpressen eines weiteren klaren Vorkalkungssaftes erfindungsgemäß ein Filterkuchen erhalten, der einen Trockensubstanz-Gehalt von etwa 60 bis 70% aufweist.

Erfindungsgemäß kann das unter Verwendung der ersten Abtrennvorrichtung erhaltene Koagulat auch unter Verwendung von einer oder mehreren Dekanter-Zentrifugen, einem oder mehreren Vakuumdrehfiltern und/oder Tellerseparatoren als zweiter Abtrennvorrichtung weiter eingedickt und aufkonzentriert werden, wobei ein Nicht-Saccharosestoff-Konzentrat mit einem hohen Trockensubstanzgehalt von etwa 40 bis 70 %, insbesondere 60 bis 70% und ein weiterer klarer Vorkalkungssaft erhalten werden.

Das unter Verwendung der zweiten Abtrennvorrichtung erhaltene Nicht-Saccharosestoff-Konzentrat beziehungsweise der erhaltene Nicht-Saccharosestoff-Filterkuchen mit einem Trockensubstanzgehalt von etwa 40 bis 70 %, insbesondere 60 bis 70% ist besonders nährstoffreich mit einem insbesondere hohen Phosphat-Anteil. Dieses Produkt stellt ein neuartiges Produkt bei der Zuckergewinnung dar.

Die durch die Abtrennungsschritte unter Verwendung der ersten und zweiten Abtrennvorrichtung erhaltenen klaren Vorkalkungssäfte werden erfindungsgemäß vereinigt und dann einer Hauptkalkung unterworfen. Im Zusammenhang mit der vorliegenden Erfindung wird unter einer "Hauptkalkung" die weitere Zugabe von Kalkmilch zum Vorkalkungssaft zur Erhöhung der Alkalität des Vorkalkungssaftes bei erhöhter Temperatur verstanden, wobei ein Hauptkalkungssaft erhalten wird. Die Aufgabe der Hauptkalkung besteht insbesondere im chemischen Abbau von Invertzucker und Säureamiden. Erfindungsgemäß ist insbesondere vorgesehen, dass die Hauptkalkung durch Zugabe von Kalkmilch bis etwa 0,6 g CaO/100 ml zum klaren Vorkalkungssaft, der nach Abtrennung des Koagulats erhalten wurde, durchgeführt wird. In der Hauptkalkung wird die Temperatur auf etwa 85°C angehoben.

Erfindungsgemäß ist vorgesehen, den bei der Hauptkalkung erhaltenen Hauptkalkungssaft anschließend durch Zugabe von Kohlendioxid einer ersten Carbonatation zu unterwerfen, wobei ein erster Schlammsaft erhalten wird. Im Zusammenhang mit der vorliegenden Erfindung wird unter einer "Carbonation" oder "Carbonatation" die Umsetzung des bei der Hauptkalkung nicht verbrauchten Kalkes mit Kohlendioxid unter Bildung von Calciumcarbonat verstanden. Durch die Zugabe von Kohlendioxid wird das im Hauptkalkungssaft gelöste Calciumhydroxid zu Calciumcarbonat umgesetzt, wobei der pH-Wert im Carbonatationsreaktor schrittweise auf etwa 10,6 bis 11,4 abgesenkt wird. In der ersten Carbonatation werden die noch im Hauptkalkungssaft enthaltenen Nicht-Saccharosestoffe und Farbstoffe adsorbtiv an das Calciumcarbonat gebunden.

Der im Carbonatationreaktor nach der ersten Carbonatation gebildete erste Schlammsaft wird erfindungsgemäß unter Verwendung von Kerzenfiltern filtriert, wobei ein erstes Schlammsaftkonzentrat und ein erster klarer Carbonatations-Saft erhalten werden. Unter einem "Kerzenfilter" wird erfindungsgemäß eine Filtervorrichtung in stehender Bauweise mit hängenden Filtereinsätzen verstanden. Der Kerzenfilter kann als Filtereinsätze sowohl keramische und Kunststoff-Filtereinsätze als auch Elemente mit gewebe aus Kunststoff oder Metall sowie Spaltrohre beziehungsweise Wickelkerzen enthalten.

Erfindungsgemäß ist auch vorgesehen, dass ein Teil des ersten Schlammsaftkonzentrates zur Vorkalkung des Zuckerrüben-Rohsaftes eingesetzt werden kann.

Erfindungsgemäß wird der bei der ersten Carbonatation erhaltene klare Carbonatations-Saft durch Zugabe von Kohlendioxid einer zweiten Carbonatation unterworfen, wobei ein zweiter Schlammsaft erhalten wird. Durch die Einleitung von Kohlendioxid bei der zweiten Carbonatation wird der pH-Wert des behandelten Zuckerrüben-Rohsaftes auf etwa 9,2 abgesenkt. Der dabei erhaltene zweite Schlammsaft wird ebenfalls über ein Eindickfilter, beispielsweise einen Kerzenfilter, filtriert.

Erfindungsgemäß ist vorgesehen, dass das erste und/oder das zweite Schlammsaftkonzentrat mit einem Teil des erhaltenen Koagulates von der ersten beziehungsweise von der zweiten Abtrennvorrichtung vereinigt und mittels einer oder mehrerer Membranfilterpressen weiter aufkonzentriert wird oder dass das erste und/oder das zweite Schlammsaftkonzentrat mittels einer/oder mehrerer Membranfilterpressen weiter aufkonzentriert wird. Erfindungsgemäß ist die Filtrierbarkeit des ersten und zweiten Schlammsaftes aufgrund der geringeren Belastung des behandelten Zuckerrüben-Rohsaftes mit Verunreinigungen gegenüber den bei herkömmlichen Kalk-Kohlendioxid-Extraktionsverfahren erhaltenen Schlammsäften deutlich verbessert. Während der nach der ersten Carbonatation bei herkömmlichen Verfahren erhaltene erste Schlammsaft einen Filtrationskoeffizienten FK von etwa 1 bis 3 sec/cm² aufweist, weist der unter Verwendung des erfindungsgemäßen Extraktionsverfahrens erhaltene erste Carbonatations-Schlammsaft einen Filtrationskoeffizienten von weniger als 0,5 sec/cm² auf. Auch der im erfindungsgemäßen Verfahren erhaltene zweite Schlammsatz weist gegenüber den unter Verwendung herkömmlicher Verfahren erhaltenen zweiten Schlammsäften deutlich verbesserte Filtrationseigenschaften auf. Dies führt zu einer Erhöhung der Pressenkapazität durch Erhöhung der Filtrationsgeschwindigkeit und eine erhöhte Standzeit der Filtertücher. Der erfindungsgemäß mittels der Membranfilterpresse aus den ersten und zweiten Schlammsaftkonzentraten erhaltene Carbokalk weist darüber hinaus mehrere Vorteile gegenüber dem Carbokalk auf, der unter Verwendung herkömmlicher Verfahren erhalten wird. So besteht der erfindungsgemäß erhaltene Carbokalk aus fast reinem Calciumcarbonat und enthält wesentlich weniger Nicht-Saccharosestoffe, insbesondere sehr wenig Phosphate. Der erfindungsgemäß erhaltene Carbokalk lässt sich daher insbesondere als Düngemittel für Ackerböden einsetzen, die überdüngt sind.

Das der vorliegenden Erfindung zugrunde liegende technische Problem wird ebenfalls durch ein Verfahren zur Reduzierung des Kalkverbrauches bei der Reinigung von Zuckerrüben-Rohsaft gelöst, wobei das Verfahren die folgenden Schritte in sequenzieller Reihenfolge umfasst:
a) Vorkalkung des Zuckerrüben-Rohsaftes durch Zugabe von Kalkmilch zum Zuckerrüben-Rohsaft bis eine Konzentration von etwa 0,1 bis 0,3 g CaO/100 ml Zuckerrüben-Rohsaft erreicht ist zur Fällung und/oder Koagulation von Nicht-Saccharosestoffen in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel bis zu einer Konzentration von 1 bis 8 ppm,
c) Abtrennung des Koagulats vom Vorkalkungssaft unter Verwendung mindestens einer ersten Abtrennvorrichtung unter Erhalt eines klaren Vorkalkungssaftes,
d) Hauptkalkung des nach Abtrennung des Koagulats erhaltenen klaren Vorkalkungssaftes durch Zugabe von Kalkmilch bis eine Konzentration von etwa 0,6 g CaO/100 ml im klaren Vorkalkungssaft erreicht ist, und
e) Durchführung einer ersten Carbonatation durch Einleitung von Kohlendioxid in den Hauptkalkungssaft und anschließende Durchführung einer zweiten Carbonatation ohne dazwischengeschaltete Nachkalkung.

Die Schritte a) und b) können in einer besonderen Ausführungsform der Erfindung auch simultan durchgeführt werden.

Es werden erfindungsgemäß 1 bis 8 ppm Flockungsmittel zugegeben, z.B. bei Verwendung einer Tellerzentrifuge oder einer Dekanterzentrifuge als erste Abtrennvorrichtung. Bei Verwendung eines statischen oder dynamischen Dekanters als erste Abtrennvorrichtung werden erfindungsgemäß bevorzugt 1 bis 3 ppm Flockungsmittel zugegeben. Erfindungsgemäß besonders bevorzugte Flockungsmittel sind die Produkte AN 945, 2440 und 2540.

Das unter Verwendung der ersten Abtrennvorrichtung erhaltene Koagulat wird erfindungsgemäß unter Verwendung einer zweiten Abtrennvorrichtung aufkonzentriert, wobei ein weiterer klarer Vorkalkungssaft abgetrennt wird. Die zweite Abtrennvorrichtung umfasst erfindungsgemäß ein oder mehrere Dekanter-Zentrifuge(n) und/oder Tellerseparator(en) oder Membranfilterpresse(n).

Die unter Verwendung der ersten und zweiten Abtrennvorrichtung erhaltenen klaren Vorkalkungssäfte werden erfindungsgemäß dann vereinigt und einer Hauptkalkung unterworfen. Der bei der Hauptkalkung erhaltene Hauptkalkungssaft wird danach erfindungsgemäß durch Zugabe von Kohlendioxid einer ersten Carbonatation unter Erhalt eines ersten Schlammsaftes unterworfen. Der erste Schlammsaft wird anschließend mittels eines Kerzenfilters filtriert, wobei ein erstes Schlammsaftkonzentrat und ein klarer Carbonatations-Saft erhalten werden. Der erste klare Carbonatations-Saft wird erfindungsgemäß durch Einleitung von Kohlendioxid einer zweiten Carbonatation unterworfen, wobei ein zweiter Schlammsaft erhalten wird.

Das der vorliegenden Erfindung zugrunde liegende technische Problem wird ebenfalls durch ein Verfahren zur Herstellung eines nährstoffreichen, Nicht-Saccharosestoff-Konzentrates aus Zuckerrüben-Rohsaft gelöst, wobei das Verfahren folgende sequenziell durchzuführende Verfahrensschritte umfasst:
a) Vorkalkung des Zuckerrüben-Rohsaftes durch Zugabe von Kalkmilch bis eine Konzentration von etwa 0,1 bis 0,3 g CaO/100 ml Zuckerrüben-Rohsaft erreicht ist zur Fällung und/oder Koagulation der im Zuckerrüben-Rohsaft enthaltenen Nicht-Saccharosestoffe in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel in den vorgekalkten Rohsaft bis zu einer Konzentration von 1 bis 8 ppm, und
c) Abtrennung des Koagulats vom Vorkalkungssaft unter Verwendung mindestens einer ersten Abtrennvorrichtung.

Die Schritte a) und b) können in einer besonderen Ausführungsform auch simultan durchgeführt werden.

Bei den im Zuckerrüben-Rohsaft enthaltenen Nicht-Saccharosestoffen handelt es sich insbesondere um hochmolekulare Eiweißstoffe, Polysaccharide und Zellwandbestandteile sowie niedrigmolekulare organische oder anorganische Säuren, Aminosäuren und mineralische Stoffe. Bei den Zellwandbestandteilen handelt es sich vorrangig um Pektinstoffe, Lignin, Cellulose und Hemicellulose. Bei den im Zuckerrüben-Rohsaft enthaltenen Eiweißstoffen handelt es sich beispielsweise um Proteine und Nucleoproteide. Erfindungsgemäß ist bevorzugt vorgesehen, dass bei Verwendung eines statischen oder dynamischen Dekanters als erste Abtrennvorrichtung das Flockungsmittel zu einem Gehalt von 1 bis 3 ppm zugesetzt wird. Erfindungsgemäß ist ferner bevorzugt vorgesehen, dass bei Verwendung einer Zentrifuge, insbesondere einer Tellerzentrifuge oder Dekanterzentrifuge als erste Abtrennvorrichtung das Flockungsmittel zu einem Gehalt von 1 bis 8 ppm zugesetzt wird. Erfindungsgemäß besonders bevorzugte Flockungsmittel sind AN 945, 2440 und 2540.

Das unter Verwendung der ersten Abtrennvorrichtung abgetrennte Koagulat wird erfindungsgemäß mittels einer zweiten Abtrennvorrichtung weiter aufkonzentriert und eingedickt, wobei als zweite Abtrennvorrichtung eine oder mehrere Membranfilterpresse(n) oder eine oder mehrere Dekanterzentrifuge(n) und/oder Tellerseparator(en) oder ein oder mehrere Vakuumdrehfilter verwendet werden.

Das erhaltene aufkonzentrierte Koagulat, das beispielsweise in Form eines Filterkuchens vorliegt, weist vorzugsweise einen Trockensubstanz-Gehalt von 60 bis 70 % auf. Das erfindungsgemäß erhaltene Nicht-Saccharosestoff-Konzentrat zeichnet sich insbesondere durch seinen hohen Phosphat-Gehalt aus. Erfindungsgemäß ist vorgesehen, dass das aufkonzentrierte Koagulat weiter zerkleinert und getrocknet werden kann.

Die vorliegende Erfindung betrifft daher auch ein Nicht-Saccharose-Konzentrat, umfassend ein entwässertes Koagulat von Nicht-Saccharosestoffen aus Zuckerrüben-Rohsaft, erhältlich unter Verwendung eines erfindungsgemäßen Verfahrens, insbesondere erhältlich durch Vorkalkung des Zuckerrüben-Rohsaftes unter Zugabe von Kalkmilch und einem Flockungsmittel zur Fällung oder Koagulation von Nicht-Saccharosestoffen und Abtrennung der getrennten oder koagulierten Nicht-Saccharosestoffe vom Zuckerrüben-Rohsaft. Das Nicht-Saccharosestoff-Konzentrat zeichnet sich dadurch aus, dass es sich bei den Nicht-Saccharosestoffen insbesondere um hochmolekulare Eiweißstoffe, Polysaccharide und Zellwandbestandteile sowie niedrigmolekulare organische oder anorganische Säuren, Aminosäuren und mineralische Stoffe des Zuckerrüben-Rohsaftes enthält. Erfindungsgemäß weist das Konzentrat einen hohen Phosphor-Anteil auf.

Die vorliegende Erfindung betrifft ebenfalls die Verwendung des Nicht-Saccharosestoff-Konzentrates als Düngemittel oder Bodenverbesserer. Eine weitere bevorzugte Verwendung des Nicht-Saccharosestoff-Konzentrates besteht in der Verwendung als Futtermittel. Zur Verwendung als Futtermittel wird das erfindungsgemäße Nicht-Saccharosestoff-Konzentrat vorzugsweise zerkleinert, mit Melasse gemischt und getrocknet und dann als Futtermittel eingesetzt.

Die vorliegende Erfindung löst das ihr zugrundeliegende technische Problem auch durch eine Vorrichtung zur Vorkalkung von Zuckerrüben-Rohsaft und/oder zur Gewinnung eines Nicht-Saccharosestoff-Konzentrates, das aus einem konzentrierten Koagulat von Nicht-Saccharosestoffen aus Zuckerrüben-Rohsaft besteht, umfassend mindestens einen Behälter zur Kalkmilch-Behandlung des Zuckerrüben-Rohsaftes zur Koagulation der im Zuckerrüben-Rohsaft enthaltenen Nicht-Saccharosestoffe, der mindestens einen Einlauf für den Zuckerrüben-Rohsaft, mindestens einen Einlauf für Kalkmilch und einen Ablauf zum Austrag des vorgekalkten Zuckerrüben-Rohsaftes aufweist, und mindestens eine erste Abtrennvorrichtung zur Abtrennung des bei der Vorkalkung erhaltenen Koagulatschlammes vom Vorkalkungssaft, wobei die Abtrennvorrichtung einen mit dem Ablauf des Behälters verbundenen Einlauf für den Vorkalkungssaft, einen ersten Ablauf zum Austrag des vom Koagulatschlamm abgetrennten klaren Vorkalkungssaft und einen zweiten Ablauf zum Austrag des Koagulatschlamms aufweist. Vorzugsweise handelt es sich bei der ersten Abtrennvorrichtung um einen statischen oder dynamischen Dekanter oder eine oder mehrere Zentrifuge(n), insbesondere eine oder mehrere Tellerzentrifuge(n) oder/und Dekanterzentrifuge(n).

In bevorzugter Ausführungsform ist der zweite Ablauf der ersten Abtrennvorrichtung über eine Zuleitung mit einer zweiten Abtrennvorrichtung verbunden, um den in der ersten Abtrennvorrichtung erhaltenen Koagulatschlamm weiter aufzukonzentrieren und einzudicken.

Die zweite Abtrennvorrichtung weist erfindungsgemäß einen Einlauf für den aus der ersten Abtrennvorrichtung ausgetragenen Koagulatschlamm, einen ersten Ablauf zum Austrag des bei der Koagulatschlamm-Aufkonzentrierung erhaltenen klaren Vorkalkungssaft und einen zweiten Auslauf zum Austrag des aufkonzentrierten Koagulatschlammes auf. Bei der zweiten Abtrennvorrichtung handelt es sich erfindungsgemäß besonders bevorzugt um eine oder mehrere Membranfilterpresse(n) oder mindestens eine Zentrifuge, insbesondere einen Tellerseparator oder eine Dekanterzentrifuge oder einen Vakuumdrehfilter.

Bei dem zur Vorkalkung des Zuckerrüben-Rohsaftes verwendeten Behälter oder Reaktor kann es sich beispielsweise um einen stehenden Behälter handeln, der durch im Wesentlichen horizontal ausgerichtete Zwischenböden in übereinander liegende Kammern unterteilt ist, die über Durchlassöffnungen in Verbindung stehen und von Rührelementen beaufschlagt werden, mittels derer die Einstellung des pH-Wert-Verlaufes einfach durchgeführt werden kann. Dabei können als Rührelemente Axialpumpen eingesetzt werden. Die einzelnen Kammern des Reaktors können jedoch auch über externe Rohrleitungen verbunden sein, die den Saft vom Anfang einer Kammer zum Ende der nächsten Kammer leiten.

Der Vorkalkungs-Reaktor oder Vorkalkungs-Behälter kann jedoch auch als Rührkesselkaskade ausgeführt sein, deren Stufen jeweils mindestens eine Kammer oder mehrere der Reihe nach von Saft durchströmte Kammern aufweisen.

Vorzugsweise erlaubt der erfindungsgemäß eingesetzte Vorkalkungs-Reaktor oder Vorkalkungs-Behälter eine progressive Alkalisierung des Zuckerrüben-Rohsaftes im Gegenstrom zu bereits alkalisiertem Saft. Der erfindungsgemäß eingesetzte Vorkalkungs-Reaktor weist daher geeignet Transporteinrichtungen auf, die eine erforderliche Rückführmenge mit möglichst hoher Konstanz entgegen der Hauptströmungsrichtung führen.

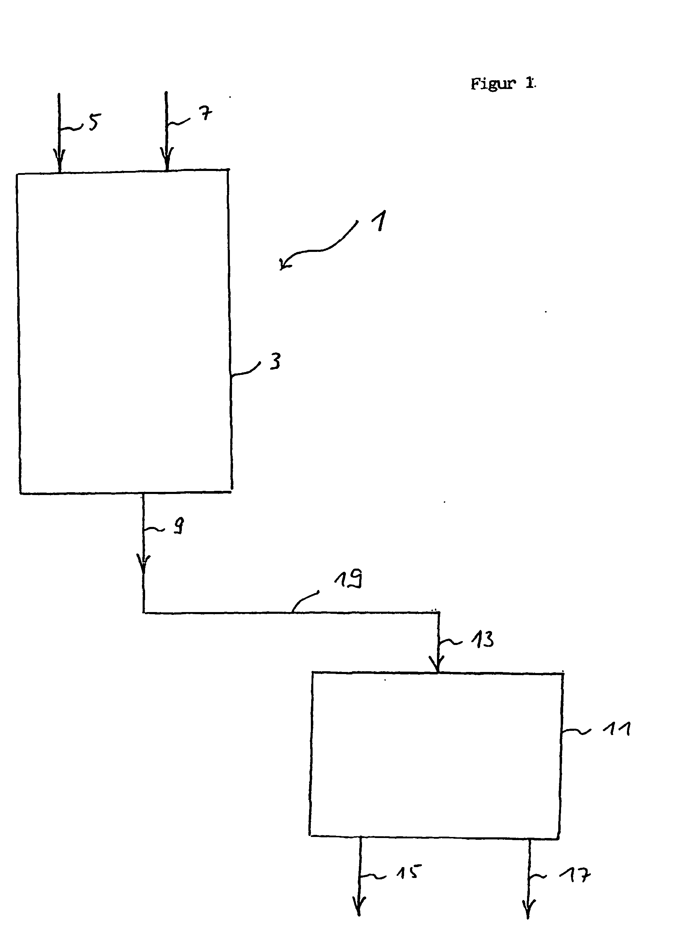

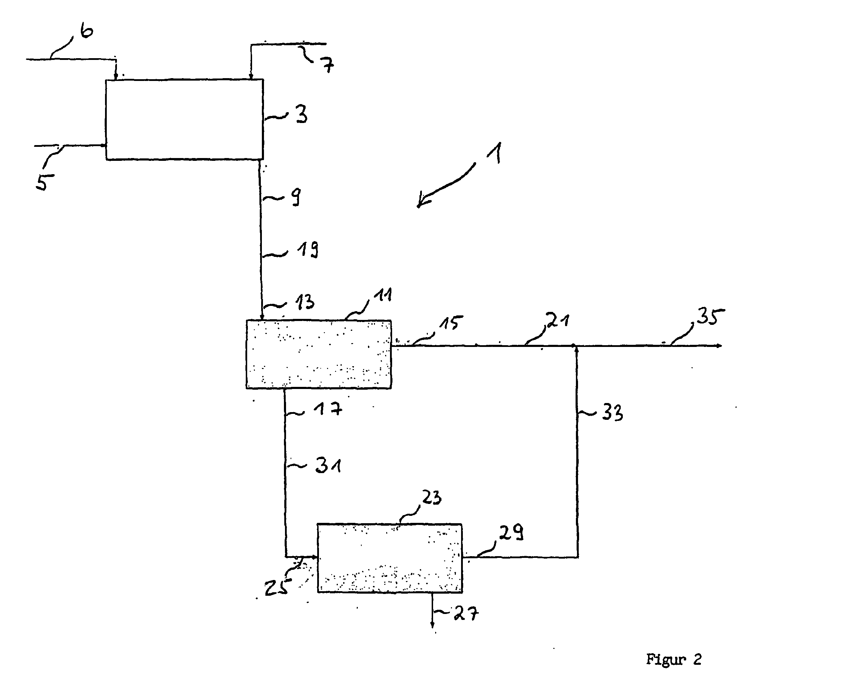

Die Erfindung wird durch die Figuren 1 und 2 und das Beispiel näher erläutert.

Figur 1 zeigt in schematischer Form eine Ausführungsform der erfindungsgemäßen Vorrichtung zur Vorkalkung von Zuckerrüben-Rohsaft und/oder zur Gewinnung eines Nicht-Saccharosestoff-Konzentrates, umfassend einen Behälter 3 zur Kalkmilch-Behandlung des Zuckerrüben-Rohsaftes und eine damit verbundene erste Abtrennvorrichtung 11 zur Abtrennung des bei der Vorkalkung im Behälter 3 erhaltenen Koagulats vom Vorkalkungssaft. Der Behälter 3 weist einen Einlauf 5 für den Zuckerrüben-Rohsaft und einen Einlauf 7 für die Kalkmilch auf. Der Behälter 3 weist ferner einen Ablauf 9 zum Austrag des Vorkalkungssaftes auf. Der Ablauf 9 des Vorkalkungsbehälters 3 ist über eine Leitung 19 mit dem Einlauf 13 der ersten Abtrennvorrichtung 11 verbunden, so dass der Vorkalkungssaft aus dem Vorkalkungsbehälter 3 in die erste Abtrennvorrichtung 11 gelangt. In der ersten Abtrennvorrichtung 11 wird das im Vorkalkungssaft gebildete Koagulat als Koagulatschlamm vom klaren Vorkalkungssaft abgetrennt; wobei der Koagulatschlamm über den Ablauf 17 der Abtrennvorrichtung 11 aus der Abtrennvorrichtung 11 heraustransportiert wird, während der geklärte Vorkalkungssaft über den Ablauf 15 der Abtrennvorrichtung 11 aus der Abtrennvorrichtung 11 heraustransportiert wird.

Figur 2 zeigt in schematischer Form eine weitere Ausführungsform der erfindungsgemäßen Vorrichtung zur Vorkalkung von Zuckerrüben-Rohsaft und/oder zur Gewinnung eines Nicht-Saccharosestoff-Konzentrates. Die erfindungsgemäße Vorrichtung 1 umfasst einen Behälter 3 zur Kalkmilch-Behandlung des Zuckerrüben-Rohsaftes und eine damit verbundene erste Abtrennvorrichtung 11 zur Abtrennung des bei der Vorkalkung im Behälter 3 erhaltenen Koagulates vom Vorkalkungssaft. Der Behälter 3 weist neben dem Einlauf 5 für den Rohsaft und dem Einlauf 7 für die Kalkmilch noch einen Einlauf 6 zum Eintrag von Schlammsaftkonzentrat, das aus der nicht dargestellten ersten und zweiten Carbonatation erhalten wird, auf. Der Behälter 3 weist ebenfalls einen Ablauf 9 zum Austrag des erhaltenen Vorkalkungssaftes auf. Der Ablauf 9 des Vorkalkungsbehälters 3 ist über eine Leitung 19 mit dem Einlauf 13 der ersten Abtrennrichtung 11 verbunden, so dass der Vorkalkungssaft aus dem Vorkalkungsbehälter 3 in die erste Abtrennvorrichtung 11 gelangt. In der ersten Abtrennvorrichtung 11 wird das im Vorkalkungssaft gebildete Koagulat als Koagulatschlamm vom klaren Vorkalkungssaft abgetrennt. Der geklärte Vorkalkungssaft wird über den Ablauf 15 aus der ersten Abtrennvorrichtung 11 heraustransportiert. Der abgtrennte Koagulatschlamm wird über den Ablauf 17 aus der ersten Abtrennvorrichtung 11 heraustransportiert. Der Ablauf 17 ist über die Leitung 31 mit dem Einlauf 25 der zweiten Abtrennvorrichtung 23 verbunden, so dass der Koagulatschlamm aus der ersten Abtrennvorrichtung 11 über den Ablauf 17, die Leitung 31 und den Einlauf 25 in die zweite Abtrennrichtung 23 gelangt. In der zweiten Abtrennvorrichtung 23 wird der eingetragene Koagulatschlamm aufkonzentriert, wobei ein aufkonzentrierter Koagulatschlamm und ein weiterer klarer Vorkalkungssaft erhalten werden. Der aufkonzentrierte Koagulatschlamm wird über den Ablauf 27 aus der zweiten Abtrennvorrichtung 23 heraustransportiert. Der in der zweiten Abtrennvorrichtung 23 gebildete klare Vorkalkungssaft wird über den Ablauf 29 aus der zweiten Abtrennvorrichtung 23 heraustransportiert und über die damit verbundene Leitung 33 der Leitung 21, in der der klare Vorkalkungssaft aus der ersten Abtrennvorrichtung 11 transportiert wird, zugeführt. Auf diese Weise wird der klare Vorkalkungssaft aus der zweiten Abtrennvorrichtung 23 mit dem klaren Vorkalkungssaft aus der ersten Abtrennvorrichtung 11 gemischt. Das Gemisch der klaren Vorkalkungssäfte aus der ersten Abtrennvorrichtung 11 und der zweiten Abtrennvorrichtung 23 wird dann gemeinsam über die Leitung 35 und über nicht dargestellte Wärmetauscher zur Hauptkalkung geleitet.

### Beispiel

### Saftreinigung mit der Abtrennung von Vorkalkungskoagulat

### Vorkalkung

30 kg Rohsaft werden in einen beheizbaren Behälter mit einem Volumen von 50 l, der ein Rührwerk, ein CO₂-Einleitungsrohr und eine pH-Elektrode aufweist, gegeben und auf 55 °C erhitzt. Über einen Zeitraum von 20 min wird dem Rohsaft stufenweise Kalkmilch bis zum pH-Wert des optimalen Flockungspunktes der Vorkalkung (ca. 0,1 bis 0,3 g CaO/100 ml Saft) zugesetzt. Zur Erhöhung der Absetzgeschwindigkeit wird anschließend ein polyanionisches Flockungshilfsmittel (AN 945) zugesetzt. Der gebildete klare Überstand (Klarsaft) wird in einen Vorratsbehälter abgezogen. Das gebildete Schlammsaftkonzentrat wird abgelassen und einer Membranfilterpresse oder einer Dekanterzentrifuge zugeführt.

### Hauptkalkung

25 kg Klarsaft werden in den gereinigten, beheizbaren Behälter gegeben und mit Kalkmilch in einer Menge von 0,6 g CaO/100 ml Saft (herkömmliches Verfahren etwa 1,0-1,1 gCaO/100 ml Saft) versetzt. Dann wird die Safttemperatur auf 85°C erhöht. Diese Temperatur wird 20 min gehalten.

### Erste Carbonatation

Durch Einleiten von CO₂ wird der pH-Wert über einen Zeitraum von 15 min auf 11,2 gesenkt.

### Erste Filtration

Der carbonatisierte Saft wird in eine 30-1-Drucknutsche überführt und filtriert. Der Filtrationskoeffizient des erhaltenen Schlammsaftes ist kleiner als 0,5 s/cm², während der Filtrationskoeffizient des mittels des herkömmlichen Verfahrens erhaltenen Schlammsaftes etwa 2 s/cm² beträgt.

### Zweite Carbonatation

Der filtrierte Saft wird in den gereinigten, beheizbaren Behälter überführt und auf 95 °C erhitzt. Durch Einleiten von CO₂ wird der pH-Wert auf 9,2 gesenkt.

### 2. Filtration

Der carbonatisierte Saft wird in eine 30-1-Drucknutsche überführt und filtriert. Man erhält den Dünnsaft.

## Patentansprüche

1. Verfahren zur Extraktreinigung von Zuckerrüben-Rohsaft, umfassend:
a) Vorkalkung des Rohsaftes durch Zugabe von Kalkmilch bis eine Konzentration von etwa 0,1 bis 0,3 g CaO/100 ml Rohsaft erreicht ist zur Fällung oder/und Koagulation von Nicht-Saccharosestoffen in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel bis zu einer Konzentration von 1 bis 8 ppm,
c) Abtrennung des Koagulats vom Vorkalkungssaft unter Verwendung mindestens einer ersten Abtrennvorrichtung unter Erhalt eines klaren Vorkalkungssaftes,
d) Hauptkalkung des nach Abtrennung des Koagulats erhaltenen Vorkalkungssaftes durch Zugabe von Kalkmilch bis eine Konzentration von etwa 0,6 g CaO/100 ml im klaren Vorkalkungssaft erreicht ist, und
e) Durchführung einer ersten Carbonatation durch Einleitung von Kohlendioxid in den Hauptkalkungssaft und gegebenenfalls anschließende Durchführung einer zweiten Carbonatation.

2. verfahren nach Anspruch 1, wobei 1 bis 3 ppm Flockungsmittel zugesetzt werden.

3. Verfahren nach einem der Ansprüche 1 oder 2, wobei als erste Abtrennvorrichtung ein statischer oder dynamischer Dekanter verwendet wird.

4. Verfahren nach einem der Ansprüche 1 oder 2, wobei als erste Abtrennvorrichtung eine Zentrifuge verwendet wird.

5. Verfahren nach Anspruch 4, wobei die Zentrifuge eine Tellerzentrifuge oder Dekanterzentrifuge ist.

6. verfahren nach einem der Ansprüche 1 bis 5, wobei das abgetrennte Koagulat unter Verwendung einer zweiten Abtrennvorrichtung durch Abtrennung eines weiteren klaren Vorkalkungssaftes weiter aufkonzentriert wird.

7. Verfahren nach Anspruch 6, wobei als zweite Abtrennvorrichtung eine oder mehrere Membranfilterpresse(n) verwendet wird.

8. Verfahren nach Anspruch 6, wobei als zweite Abtrennvorrichtung ein oder mehrere Dekanter-Zentrifuge(n) und/oder Tellerseparatoren und/oder Vakuumdrehfilter verwendet werden.

9. verfahren nach einem der Ansprüche 1 bis 8, wobei ein aufkonzentriertes Koagulat mit einem Trockensubstanz-Gehalt von 40% bis 70% erhalten wird.

10. Verfahren nach einem der Ansprüche 1 bis 9, wobei die unter Verwendung der ersten und zweiten Abtrennvorrichtung erhaltenen klaren Vorkalkungssäfte vereinigt und einer Hauptkalkung unterworfen werden.

11. Verfahren nach Anspruch 10, wobei der bei der Hauptkalkung erhaltene Hauptkalkungssaft durch Zugabe von Kohlendioxid einer ersten Carbonatation unter Erhalt eines ersten Schlammsaftes unterworfen wird.

12. Verfahren nach Anspruch 11, wobei der pH-Wert des Hauptkalkungssaftes durch Zugabe von Kohlendioxid schrittweise auf 10,6 bis 11,4 abgesenkt wird.

13. Verfahren nach Anspruch 11 oder 12, wobei der erste Schlammsaft mittels eines Kerzenfilters unter Erhalt eines ersten Schlammsaftkonzentrates und eines ersten klaren Carbonatations-Saftes filtriert wird.

14. Verfahren nach Anspruch 13, wobei ein Teil des ersten Schlammsaftkonzentrates zur Vorkalkung des Rüben-Rohsaftes eingesetzt wird.

15. Verfahren nach Anspruch 13, wobei der erste klare Carbonatations-Saft durch Zugabe von Kohlendioxid einer zweiten Carbonatation unter Erhalt eines zweiten Schlammsaftes unterworfen wird.

16. Verfahren nach Anspruch 15, wobei der zweite Schlammsaft durch Abtrennung eines zweiten klaren Carbonatations-Saftes mittels eines Filter-Abscheiders unter Erhalt eines zweiten Schlammsaftkonzentrates aufkonzentriert wird.

17. Verfahren nach Anspruch 13 und 16, wobei das erste und zweite Schlammsaftkonzentrat vereinigt und mittels einer Membranfilterpresse unter Erhalt eines Carbokalks weiter aufkonzentriert werden.

18. Verfahren zur Reduzierung des Kalkverbrauches bei der Extraktreinigung von Zuckerrüben-Rohsaft, umfassend:
a) Vorkalkung des Rohsaftes durch Zugabe von Kalkmilch bis etwa 0,1 bis 0,3 g CaO/100 ml Rohsaft zur Fällung oder Koagulation von Nicht-Saccharosestoffen in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel bis zu einer Konzentration von 1 bis 8 ppm,
c) Abtrennung des Koagulats vom Vorkalkungssaft unter Verwendung mindestens einer ersten Abtrennvorrichtung unter Erhalt eines klaren Vorkalkungssaftes,
d) Hauptkalkung des nach Abtrennung des Koagulats erhaltenen Vorkalkungssaftes durch Zugabe von Kalkmilch bis etwa 0,6 g CaO/100 ml zum klaren Vorkalkungssaft, und
e) Durchführung einer ersten Carbonatation durch Einleitung von Kohlendioxid in den Hauptkalkungssaft und anschließende Durchführung einer zweiten Carbonatation ohne dazwischengeschaltete Nachkalkung.

19. Verfahren nach Anspruch 18, wobei 1 bis 3 ppm Flockungsmittel zugegeben werden und als erste Abtrennvorrichtung ein statischer Dekanter verwendet wird.

20. Verfahren nach Anspruch 18, wobei 1 bis 8 ppm Flockungsmittel zugegeben werden und als erste Abtrennvorrichtung eine Tellerzentrifuge oder Dekanterzentrifuge verwendet wird.

21. Verfahren nach einem der Ansprüche 18 bis 20, wobei das abgetrennte Koagulat unter Verwendung einer zweiten Abtrennvorrichtung durch Abtrennung eines weiteren klaren Vorkalkungssaftes weiter aufkonzentriert wird.

22. verfahren nach Anspruch 21, wobei die zweite Abtrennvorrichtung eine oder mehrere Dekanter-Zentrifuge(n) und/oder Tellerseparatoren und/oder Vakuumdrehfilter oder/und eine oder mehrere Membranfilterpresse(n) umfasst.

23. verfahren nach einem der Ansprüche 18 bis 22, wobei die unter Verwendung der ersten und zweiten Abtrennvorrichtung erhaltenen klaren Vorkalkungssafte vereinigt und einer Hauptkalkung unterworfen werden.

24. Verfahren nach Anspruch 23, wobei der bei der Hauptkalkung erhaltene Hauptkalkungssaft durch Zugabe von Kohlendioxid einer ersten Carbonatation unter Erhalt eines ersten Schlammsaftes unterworfen wird.

25. Verfahren nach Anspruch 24, wobei der erste Schlammsaft mittels eines Kerzenfilters unter Erhalt eines ersten Schlammsaftkonzentrates und eines klaren Carbonatations-Saftes filtriert wird.

26. Verfahren nach Anspruch 25, wobei der erste klare Carbonatations-Saft durch Zugabe von Kohlendioxid einer zweiten Carbonatation unter Erhalt eines zweiten Schlammsaftes unterworfen wird.

27. Verfahren zur Herstellung eines nährstoffreichen Nicht-Saccharosestoff-Konzentrates aus Zuckerrüben-Rohsaft, umfassend:
a) Vorkalkung des Rohsaftes durch Zugabe von Kalkmilch bis etwa 0,1 bis 0,3 g CaO/100 ml Rohsaft zur Fällung oder Koagulation der im Rohsaft enthaltenen Nicht-Saccharosestoffe in Form eines Koagulats,
b) Zugabe mindestens eines Copolymers aus Acrylamid und Natriumacrylat mit einer Molmasse von etwa 5 Mio. bis etwa 22 Mio. als polyanionisches Flockungsmittel in den vorgekalkten Rohsaft bis zu einer Konzentration von 1 bis 8 ppm,
c) Abtrennung des Koagulats vom Vorkalkungssaft unter Verwendung mindestens einer ersten Abtrennvorrichtung.

28. Verfahren nach Anspruch 27, wobei es sich bei den im Rohsaft enthaltenen Nicht-Saccharosestoffen um hochmolekulare Eiweißstoffe, Polysaccharide und Zellwandbestandteile sowie niedrigmolekulare organische oder anorganische Säuren, Aminosäuren und mineralische Stoffe handelt.

29. Verfahren nach Anspruch 28, wobei es sich bei den Zellwandbestandteilen um Pectinstoffe, Lignin, Cellulose und Hemicellulose handelt.

30. Verfahren nach Anspruch 28, wobei es sich bei den Polysacchariden um Lävan und Dextran handelt.

31. Verfahren nach Anspruch 28, wobei es sich bei den Eiweißstoffen um Proteine, Nucleoproteine und Betain handelt.

32. verfahren nach einem der Ansprüche 27 bis 31, wobei 1 bis 3 ppm Flockungsmittel zugesetzt werden.

33. verfahren nach Anspruch 32, wobei als erste Abtrennvorrichtung ein statischer oder dynamischer Dekanter verwendet wird.

34. Verfahren nach einem der Ansprüche 27 bis 31, wobei als erste Abtrennvorrichtung eine Tellerzentrifuge oder Dekanterzentrifuge verwendet wird.

35. Verfahren nach einem der Ansprüche 27 bis 34, wobei das abgetrennte Koagulat unter Verwendung einer zweiten Abtrennvorrichtung weiter aufkonzentriert wird.

36. Verfahren nach Anspruch 35, wobei die zweite Abtrennvorrichtung eine oder mehrere Dekanter-Zentrifuge(n) und/oder Tellerseparator(en) und/oder vakuumdrehfilter und/oder eine Membranfilterpresse(n) umfasst.

37. Verfahren nach einem der Ansprüche 27 bis 36, wobei ein aufkonzentriertes Koagulat mit einem Trockensubstanz-Gehalt von 40% bis 70% erhalten wird.

38. Verfahren nach Anspruch 37, wobei das aufkonzentrierte Koagulat zerkleinert und getrocknet wird.

39. Nicht-Saccharosestoff-Konzentrat, umfassend ein entwässertes Koagulat von Nicht-Saccharosestoffen aus Zuckerrüben-Rohsaft, erhältlich unter Verwendung eines Verfahrens nach einem der Ansprüche 1 bis 17 oder eines Verfahrens nach einem der Ansprüche 27 bis 38 durch Vorkalkung des Rohsaftes unter Zugabe von Kalkmilch und einem Flockungsmittel zur Fällung oder Koagulation von Nicht-Saccharosestoffen und Abtrennung der getrennten oder koagulierten Nicht-Saccharosestoffen vom Rohsaft.

40. Nicht-Saccharosestoff-Konzentrat nach Anspruch 39, wobei es sich bei den Nicht-Saccharosestoffen um hochmolekulare Eiweißstoffe, Polysaccharide und Zellwandbestandteile sowie niedrigmolekulare organische oder anorganische Säuren, Aminosäuren und mineralische Stoffe handelt.

41. Nicht-Saccharosestoff-Konzentrat nach Anspruch 39 oder 40, wobei das Konzentrat einen hohen Phosphor-Anteil aufweist.

42. Verwendung eines Nicht-Saecharosestoff-Konzentrates nach einem der Ansprüche 39 bis 41 als Phosphatdünger oder Bodenverbesserer.

43. Verwendung eines Nicht-Saccharosestoff-Konzentrates nach einem der Ansprüche 39 bis 41 als Futtermittel.

44. Verwendung nach Anspruch 43, wobei das Nicht-Saccharosestoff-Konzentrat zerkleinert, mit Melasse gemischt und getrocknet wird.

45. Vorrichtung zur Vorkalkung von Zuckerrüben-Rohsaft und/oder zur Gewinnung eines Nicht-Saccharosestoff-Konzentrates, das aus einem konzentrierten Koagulat von Nicht-Saccharosestoffen aus Zuckerrüben-Rohsaft besteht, umfassend
mindestens einen Behälter (3) zur Kalkmilch-Behandlung des Rohsaftes zur Koagulation der im Rohsaft enthaltenen Nicht-Saccharosestoffe, der mindestens einen Einlauf (5) für den Rohsaft, mindestens einen Einlauf (7) für Kalkmilch und einen Ablauf (9) zum Austrag des vorgekalkten Rohsaftes aufweist,
mindestens eine erste Abtrennvorrichtung (11) zur Abtrennung des bei der Vorkalkung erhaltenen Koagulatschlammes vom Vorkalkungssaft, wobei die erste Abtrennvorrichtung einen mit dem Ablauf (9) des Behälters verbundenen Einlauf (13) für den Vorkalkungssaft, einen ersten Ablauf (15) zum Austrag des vom Koagulatschlamm abgetrennten klaren Vorkalkungssaftes und einen zweiten Ablauf (17) zum Austrag des Koagulatschlamms aufweist, und
mindestens eine zweite Abtrennvorrichtung (23) zur weiteren Aufkonzentrierung des Koagulatschlamms, wobei die zweite Auftrennvorrichtung einen mit dem zweiten Ablauf (17) der ersten Abtrennvorrichtung verbundenen Einlauf (25) für den abgetrennten Koagulatschlamm, einen ersten Ablauf (29) zum Austrag des abgetrennten klaren Vorkalkungssafts und einen zweiten Ablauf (27) zum Austrag des aufkonzentrierten Koagulatschlamms aufweist,
wobei der aus dem ersten Ablauf (15) der ersten Abtrennvorrichtung geführte Vorkalkungssaft mit dem aus dem ersten Ablauf (29) der zweiten Abtrennvorrichtung geführte Vorkalkungssaft in einer gemeinsamen Leitung (35) zusammengeführt wird.

46. Vorrichtung nach Anspruch 45, wobei die erste Abtrennvorrichtung ein statischer oder dynamischer Dekanter oder eine Zentrifuge ist.

47. Vorrichtung nach Anspruch 45 oder 46, wobei die Zentrifuge eine Tellerzentrifuge oder Dekanterzentrifuge ist.

48. Vorrichtung nach einem der Ansprüche 45 bis 47, wobei die zweite Abtrennvorrichtung eine oder mehrere Membranfilterpresse(n) oder mindestens eine Zentrifuge oder Vakuumdrehfilter umfasst.

49. Vorrichtung nach Anspruch 48, wobei es sich bei der Zentrifuge um einen Tellerseparator oder eine Dekanter-Zentrifuge handelt.

## Claims

1. Process for extract purification of sugar beet raw juice, comprising:
a) preliming of the raw juice by adding milk of lime until a concentration of about 0.1 to 0.3 g of CaO/100 ml of raw juice has been attained for precipitation or/and coagulation of non-sucrose substances in the form of a coagulate,
b) addition of at least one copolymer of acrylamide and sodium acrylate having a molar mass of about 5 million to about 22 million as a polyanionic flocculant up to a concentration of 1 to 8 ppm,
c) removal of the coagulate from the preliming juice using at least one first removal apparatus to obtain a clear preliming juice,
d) main liming of the preliming juice obtained after removal of the coagulate by adding milk of lime until a concentration of about 0.6 g of CaO/100 ml in the clear preliming juice has been attained, and
e) performance of a first carbonatation by introducing carbon dioxide into the main liming juice and optional subsequent performance of a second carbonatation.

2. Process according to claim 1, wherein 1 to 3 ppm of flocculant are added.

3. Process according to one of claims 1 and 2, wherein the first removal apparatus used is a static or dynamic decanter.

4. Process according to one of claims 1 and 2, wherein the first removal apparatus used is a centrifuge.

5. Process according to claim 4, wherein the centrifuge is a disk centrifuge or decanter centrifuge.

6. Process according to one of claims 1 to 5, wherein the removed coagulate is concentrated further using a second removal apparatus by removing a further clear preliming juice.

7. Process according to claim 6, wherein the second removal apparatus used is one or more membrane filter press(es).

8. Process according to claim 6, wherein the second removal apparatus used is one or more decanter centrifuge(s) and/or disk separators and/or vacuum rotary filters.

9. Process according to one of claims 1 to 8, wherein a concentrated coagulate having a dry substance content of 40 % to 70 % is obtained.

10. Process according to one of claims 1 to 9, wherein the clear preliming juices obtained using the first and second removal apparatus are combined and subjected to a main liming.

11. Process according to claim 10, wherein the main liming juice obtained in the main liming is subjected to a first carbonatation by adding carbon dioxide to obtain a first carbonated juice.

12. Process according to claim 11, wherein the pH of the main liming juice is lowered stepwise to from 10.6 to 11.4 by adding carbon dioxide.

13. Process according to claim 11 or 12, wherein the first carbonated juice is filtered by means of a candle filter to obtain a first carbonated juice concentrate and a first clear carbonatation juice.

14. Process according to claim 13, wherein a portion of the first carbonated juice concentrate is used for preliming of the beet raw juice.

15. Process according to claim 13, wherein the first clear carbonatation juice is subjected to a second carbonatation by adding carbon dioxide to obtain a second carbonated juice.

16. Process according to claim 15, wherein the second carbonated juice is concentrated further by removing a second clear carbonatation juice by means of a filter separator to obtain a second carbonated juice concentrate.

17. Process according to claim 13 and 16, wherein the first and second carbonated juice concentrate are combined and concentrated further by means of a membrane filter press to obtain a carbolime.

18. Process for reducing the lime consumption in the extract purification of sugar beet raw juice, comprising:
a) preliming of the raw juice by adding milk of lime up to about 0.1 to 0.3 g of CaO/100 ml of raw juice for precipitation or coagulation of non-sucrose substances in the form of a coagulate,
b) addition of at least one copolymer of acrylamide and sodium acrylate having a molar mass of about 5 million to about 22 million as a polyanionic flocculant up to a concentration of 1 to 8 ppm,
c) removal of the coagulate from the preliming juice using at least one first removal apparatus to obtain a clear preliming juice,
d) main liming of the preliming juice obtained after removal of the coagulate by adding milk of lime up to about 0.6 g of CaO/100 ml to the clear preliming juice, and
e) performance of a first carbonatation by introducing carbon dioxide into the main liming juice and subsequent performance of a second carbonatation without intermediate postliming.

19. Process according to claim 18, wherein 1 to 3 ppm of flocculant are added and the first removal apparatus used is a static decanter.

20. Process according to claim 18, wherein 1 to 8 ppm of flocculant are added and the first removal apparatus used is a disk centrifuge or decanter centrifuge.

21. Process according to one of claims 18 to 20, wherein the removed coagulate is concentrated further using a second removal apparatus by removing a further clear preliming juice.

22. Process according to claim 21, wherein the second removal apparatus comprises one or more decanter centrifuge(s) and/or disk separators and/or vacuum rotary filters or/and one or more membrane filter press(es).

23. Process according to one of claims 18 to 22, wherein the clear preliming juices obtained using the first and second removal apparatus are combined and subjected to a main liming.

24. Process according to claim 23, wherein the main liming juice obtained in the main liming is subjected to a first carbonatation by adding carbon dioxide to obtain a first carbonated juice.

25. Process according to claim 24, wherein the first carbonated juice is filtered by means of a candle filter to obtain a first carbonated juice concentrate and a clear carbonatation juice.

26. Process according to claim 25, wherein the first clear carbonatation juice is subjected to a second carbonatation by adding carbon dioxide to obtain a second carbonated juice.

27. Process for producing a nutrient-rich non-sucrose substance concentrate from sugar beet raw juice, comprising:
a) preliming of the raw juice by adding milk of lime up to about 0.1 to 0.3 g of CaO/100 ml of raw juice for precipitation or coagulation of the non-sucrose substances present in the raw juice in the form of a coagulate,
b) addition of at least one copolymer of acrylamide and sodium acrylate having a molar mass of about 5 million to about 22 million as a polyanionic flocculant in the prelimed raw juice up to a concentration of 1 to 8 ppm,
c) removal of the coagulate from the preliming juice using at least one first removal apparatus.

28. Process according to claim 27, wherein the non-sucrose substances present in the raw juice are high molecular weight protein substances, polysaccharides and cell wall constituents, and also low molecular weight organic or inorganic acids, amino acids and mineral substances.

29. Process according to claim 28, wherein the cell wall constituents are pectin substances, lignin, cellulose and hemicellulose.

30. Process according to claim 28, wherein the polysaccharides are levan and dextran.

31. Process according to claim 28, wherein the protein substances are proteins, nucleoproteins and betaine.

32. Process according to one of claims 27 to 31, wherein 1 to 3 ppm of flocculant are added.

33. Process according to claim 32, wherein the first removal apparatus used is a static or dynamic decanter.

34. Process according to one of claims 27 to 31, wherein the first removal apparatus used is a disk centrifuge or decanter centrifuge.

35. Process according to one of claims 27 to 34, wherein the removed coagulate is concentrated further using a second removal apparatus.

36. Process according to claim 35, wherein the second removal apparatus comprises one or more decanter centrifuge(s) and/or disk separator(s) and/or vacuum rotary filters and/or a membrane filter press(es).

37. Process according to one of claims 27 to 36, wherein a concentrated coagulate with a dry substance content of 40 % to 70 % is obtained.

38. Process according to claim 37, wherein the concentrated coagulate is comminuted and dried.

39. Non-sucrose substance concentrate, comprising a dewatered coagulate of non-sucrose substances made from sugar beet raw juice, obtainable using a process according to one of claims 1 to 17 or a process according to one of claims 27 to 38 by preliming the raw juice with addition of milk of lime and a flocculant for precipitation or coagulation of non-sucrose substances and removal of the separated or coagulated non-sucrose substances from the raw juice.

40. Non-sucrose substance concentrate according to claim 39, wherein the non-sucrose substances are high molecular weight protein substances, polysaccharides and cell wall constituents, and also low molecular weight organic or inorganic acids, amino acids and mineral substances.

41. Non-sucrose substance concentrate according to claim 39 or 40, wherein the concentrate has a high phosphorus content.

42. Use of a non-sucrose substance concentrate according to one of claims 39 to 41 as a phosphate fertilizer or soil improver.

43. Use of a non-sucrose substance concentrate according to one of claims 39 to 41 as an animal feed.

44. Use according to claim 43, wherein the non-sucrose substance concentrate is comminuted, mixed with molasses and dried.

45. Apparatus for preliming sugar beet raw juice and/or for obtaining a non-sucrose substance concentrate which consists of a concentrated coagulate of non-sucrose substances made from sugar beet raw juice, comprising
at least one vessel (3) for milk of lime treatment of the raw juice for coagulation of the non-sucrose substances present in the raw juice, said vessel having at least one inlet (5) for the raw juice, at least one inlet (7) for milk of lime and an outlet (9) for discharge of the prelimed raw juice,
at least one first removal apparatus (11) for removing the coagulate slurry obtained in the preliming from the preliming juice, said first removal apparatus having an inlet (13), connected to the outlet (9) of the vessel, for the preliming juice, a first outlet (15) for discharge of the clear preliming juice removed from the coagulate slurry, and a second outlet (17) for discharge of the coagulate slurry,
and at least one second removal apparatus (23) for further concentration of the coagulate slurry, said second removal apparatus having an inlet (25), connected to the second outlet (17) of the first removal apparatus, for the removed coagulate slurry, a first outlet (29) for discharge of the removed clear preliming juice and a second outlet (27) for discharge of the concentrated coagulate slurry,
wherein the preliming juice conducted out of the first outlet (15) of the first removal apparatus is combined with the preliming juice conducted out of the first outlet (29) of the second removal apparatus in a common line (35).

46. Apparatus according to claim 45, wherein the first removal apparatus is a static or dynamic decanter or a centrifuge.

47. Apparatus according to claim 45 or 46, wherein the centrifuge is a disk centrifuge or decanter centrifuge.

48. Apparatus according to one of claims 45 to 47, wherein the second removal apparatus comprises one or more membrane filter press(es) or at least one centrifuge or vacuum rotary filter.

49. Apparatus according to claim 48, wherein the centrifuge is a disk separator or a decanter centrifuge.

## Revendications

1. Procédé de lavage d'extrait de jus brut de betterave à sucre, comprenant :
a) préchaulage du jus brut par ajout de lait de chaux jusqu'à obtention d'une concentration d'environ 0,1 à 0,3 g CaO/100 ml de jus brut pour la précipitation ou/et la coagulation de non-saccharoses sous forme d'un coagulat,
b) ajout d'au moins un copolymère d'acrylamide et d'acrylate de sodium d'une masse moléculaire d'environ 5 millions à d'environ 22 millions comme agent de floculation polyanionique jusqu'à une concentration de 1 à 8 ppm,
c) séparation du coagulat du jus de préchaulage en utilisant au moins un premier dispositif de séparation avec obtention d'un jus de préchaulage clair,
d) chaulage principal du jus de préchaulage obtenu après séparation du coagulat par ajout de lait de chaux jusqu'à obtention d'une concentration d'environ 0,6 g CaO/100 ml dans le jus de préchaulage clair, et
e) réalisation d'une première carbonatation par introduction de dioxyde de carbone dans le jus de chaulage principal et, si nécessaire, exécution d'une deuxième carbonatation.

2. Procédé selon la revendication 1, au cours duquel 1 à 3 ppm d'agent de floculation sont ajoutés.

3. Procédé selon la revendication 1 ou 2, faisant usage d'un décanteur statique ou dynamique comme premier dispositif de séparation.

4. Procédé selon la revendication 1 ou 2, faisant usage d'une centrifugeuse comme premier dispositif de séparation.

5. Procédé selon la revendication 4, la centrifugeuse étant une centrifugeuse à plateau ou une centrifugeuse à décantation.

6. Procédé selon l'une des revendications 1 à 5, au cours duquel le coagulat séparé est concentré davantage par séparation d'un autre jus de préchaulage clair en utilisant un deuxième dispositif de séparation.

7. Procédé selon la revendication 6, faisant usage d'une ou de plusieurs filtre-presses à membrane comme deuxième dispositif de séparation.

8. Procédé selon la revendication 6, faisant usage d'une ou de plusieurs centrifugeuses à décantation et/ou d'un ou plusieurs séparateurs à disque et/ou d'un ou plusieurs filtres rotatifs sous vide comme deuxième dispositif de séparation.

9. Procédé selon l'une des revendications 1 à 8, au cours duquel un coagulat plus concentré d'une teneur en extrait sec de 40 % à 70 % est obtenu.

10. Procédé selon l'une des revendications 1 à 9, au cours duquel les jus de préchaulage clairs obtenus par l'utilisation du premier et du deuxième dispositif de séparation sont réunis et soumis à un chaulage principal.

11. Procédé selon la revendication 10, au cours duquel le jus de chaulage principal obtenu lors du chaulage principal est soumis à une première carbonatation par ajout de dioxyde de carbone avec obtention d'un premier jus trouble.

12. Procédé selon la revendication 11, au cours duquel le pH du jus de chaulage principal est descendu progressivement à une valeur comprise entre 10,6 et 11,4 par ajout de dioxyde de carbone.

13. Procédé selon la revendication 11 ou 12, au cours duquel le premier jus trouble est filtré au moyen d'un filtre en forme de bougie avec obtention d'un premier concentré de jus trouble et d'un premier jus de carbonatation clair.

14. Procédé selon la revendication 13, au cours duquel une partie du premier concentré de jus trouble est utilisé pour le préchaulage du jus de betterave brut.

15. Procédé selon la revendication 13, au cours duquel le premier jus de carbonatation clair est soumis à une deuxième carbonatation par ajout de dioxyde de carbone avec obtention d'un deuxième jus trouble.

16. Procédé selon la revendication 15, au cours duquel le deuxième jus trouble est concentré davantage par séparation d'un deuxième jus de carbonatation clair au moyen d'un séparateur de filtre avec obtention d'un deuxième concentré de jus trouble.

17. Procédé selon les revendications 13 et 16, au cours duquel le premier et le deuxième concentré de jus trouble sont réunis et concentrés davantage au moyen d'un filtre-presse à membrane avec obtention d'une écume de carbonatation.

18. Procédé de réduction de la consommation de chaux lors du lavage d'extrait de jus brut de betterave à sucre, comprenant :
a) le préchaulage du jus brut par ajout de lait de chaux jusqu'à environ 0,1 à 0,3 g CaO/100 ml de jus brut pour la précipitation ou la coagulation de non-saccharoses sous forme d'un coagulat.
b) l'ajout d'au moins un copolymère d'acrylamide et d'acrylate de sodium d'une masse moléculaire d'environ 5 millions à 22 millions comme agent de floculation polyanionique jusqu'à obtention d'une concentration de 1 à 8 ppm,
c) la séparation du coagulat du jus de préchaulage en utilisant au moins un premier dispositif de séparation avec obtention d'un jus de préchaulage clair,
d) le chaulage principal du jus de préchaulage obtenu après séparation du coagulat par ajout de lait de chaux au jus de préchaulage clair jusqu'à obtention d'une concentration d'environ 0,6 g CaO/100 ml, et
e) l'exécution d'une première carbonatation par introduction de dioxyde de carbone dans le jus de chaulage principal et, puis l'exécution d'une deuxième carbonatation sans second chaulage intermédiaire.

19. Procédé selon la revendication 18, au cours duquel 1 à 3 ppm d'agent de floculation sont ajoutés faisant usage d'un décanteur statique comme premier dispositif de séparation.

20. Procédé selon la revendication 18, au cours duquel 1 à 8 ppm d'agent de floculation sont ajouté faisant usage d'une centrifugeuse à plateau ou d'une centrifugeuse à décantation comme premier dispositif de séparation.

21. Procédé selon l'une des revendications 18 à 20, au cours duquel le coagulat séparé est concentré davantage par séparation d'un autre jus de préchaulage clair en utilisant un deuxième dispositif de séparation.

22. Procédé selon la revendication 21, le deuxième dispositif de séparation comprenant une ou plusieurs centrifugeuses à décantation et/ou un ou plusieurs séparateurs à disque et/ou un ou plusieurs filtres rotatifs sous vide ou/et un ou plusieurs filtre-presses à membrane .

23. Procédé selon l'une des revendications de 18 à 22, au cours duquel les jus de préchaulage clairs obtenus par l'utilisation du premier et du deuxième dispositif de séparation sont réunis et soumis à un chaulage principal.

24. Procédé selon la revendication 23, au cours duquel le jus de chaulage principal obtenu lors du chaulage principal est soumis à une première carbonatation par ajout de dioxyde de carbone avec obtention d'un premier jus trouble.

25. Procédé selon la revendication 24, au cours duquel le premier jus trouble est filtré au moyen d'un filtre en forme de bougie avec obtention d'un premier concentré de jus trouble et d'un jus de carbonatation clair.

26. Procédé selon la revendication 25, au cours duquel le premier jus de carbonatation clair est soumis à une deuxième carbonatation par ajout de dioxyde de carbone avec obtention d'un deuxième jus trouble.

27. Procédé pour la production d'un concentré non-saccharose riche en substances nutritives à partir du jus brut de betterave à sucre, comprenant :
a) le préchaulage du jus brut par ajout de lait de chaux jusqu'à environ 0,1 à 0,3 g CaO/100 ml de jus brut pour la précipitation ou la coagulation de non-saccharoses contenus dans le jus brut sous forme de coagulat,
b) l'ajout d'au moins un copolymère d'acrylamide et d'acrylate de sodium d'une masse moléculaire d'environ 5 mio à d'environ 22 mio comme agent de floculation polyanionique dans le jus brut préchaulé jusqu'à obtention d'une concentration de 1 à 8 ppm,
c) la séparation du coagulat du jus de préchaulage en utilisant au moins un premier dispositif de séparation.

28. Procédé selon la revendication 27, au cours duquel les non-saccharoses contenus dans le jus brut sont des protides, des polysaccharides et des constituants de la paroi cellulaire de haut poids moléculaire ainsi que des acides organiques ou anorganiques, des acides aminés et des substances minérales de faible poids moléculaire.

29. Procédé selon la revendication 28, les constituants de la paroi cellulaire étant des pectines, lignine, de la cellulose et de l'hémicellulose.

30. Procédé selon la revendication 28, les polysaccharides étant la lévane et la dextrane.

31. Procédé selon la revendication 28, les protides étant des protéines, des nucléoprotéines et la bétaïne.

32. Procédé selon l'une des revendications 27 à 31, au cours duquel 1 à 3 ppm d'agent de floculation sont ajoutés.

33. Procédé selon la revendication 32, faisant usage d'un décanteur statique ou dynamique comme premier dispositif de séparation.

34. Procédé selon l'une des revendications 27 à 31, faisant usage d'une centrifugeuse à plateau ou d'une centrifugeuse à décantation comme premier dispositif de séparation.

35. Procédé selon l'une des revendications 27 à 34, au cours duquel le coagulat séparé est concentré davantage en utilisant un deuxième dispositif de séparation.

36. Procédé selon la revendication 35, au cours duquel le deuxième dispositif de séparation comprend une ou plusieurs centrifugeuses à décantation et/ou un ou plusieurs séparateurs à disque et/ou un ou plusieurs filtres rotatifs sous vide et/ou un ou plusieurs filtre-presses à membrane.

37. Procédé selon l'une des revendications 27 à 36, au cours duquel un coagulat plus concentré d'une teneur en extrait sec de 40 % à 70 % est obtenu.

38. Procédé selon la revendication 37, le coagulat plus concentré étant broyé et séché.

39. Concentré non-saccharose, comprenant un coagulat déshydraté de non-saccharoses obtenus de jus brut de betterave à sucre, pouvant être obtenu en utilisant un procédé selon l'une des revendications 1 à 17 ou un procédé selon l'une des revendications 27 à 38 par préchaulage du jus brut en ajoutant du lait de chaux et un agent de floculation pour la précipitation ou coagulation de non-saccharoses et la séparation des non-saccharoses séparés ou coagulés du jus brut.

40. Concentré non-saccharose selon la revendication 39, les non-saccharoses étant des protides, des polysaccharides et des constituants de la paroi cellulaire de haut poids moléculaire ainsi que des acides organiques ou anorganiques, des acides aminés et des substances minérales de faible poids moléculaire.

41. Concentré non-saccharose selon la revendication 39 ou 40, le concentré ayant une teneur élevée en phosphore.

42. Utilisation d'un concentré non-saccharose selon l'une des revendications 39 à 41 en tant qu'engrais phosphaté ou amendement.

43. Utilisation d'un concentré non-saccharose selon l'une des revendications 39 à 41 en tant qu'aliment pour animaux.

44. Utilisation selon la revendication 43, au cours duquel le concentré non-saccharose est broyé, mélangé à de la mélasse et séché.

45. Dispositif de préchaulage de jus brut de betterave à sucre et/ou d'obtention d'un concentré non-saccharose, constitué d'un coagulat concentré de non-saccharoses obtenus à partir du jus brut de betterave à sucre comprenant
au moins un récipient (3) pour le traitement du lait de chaux du jus brut pour la coagulation des non-saccharoses contenus dans le jus brut, récipient qui présente au moins une entrée (5) pour le jus brut, au moins une entrée (7) pour le lait de chaux et une sortie (9) pour l'évacuation du jus brut préchaulé,
au moins un premier dispositif de séparation (11) pour séparer le coagulat trouble obtenu lors du préchaulage à partir du jus de préchaulage, le premier dispositif de séparation présentant une entrée (13) pour le jus de préchaulage reliée à la sortie (9) du récipient, une première sortie (15) pour l'évacuation du jus de préchaulage clair séparé du coagulat trouble et une deuxième sortie (17) pour l'évacuation du coagulat trouble et
au moins un deuxième dispositif de séparation (23) pour poursuivre la concentration du coagulat trouble, le deuxième dispositif de séparation présentant une entrée (25) pour le coagulat trouble séparé reliée à la deuxième sortie (17) du premier dispositif de séparation, une première sortie (29) pour l'évacuation du jus de préchaulage clair séparé et une deuxième sortie (27) pour l'évacuation du coagulat trouble concentré davantage,
le jus de préchaulage étant amené par la première sortie (15) du premier dispositif de séparation rejoignant le jus de préchaulage amené par la première sortie (29) du deuxième dispositif de séparation dans une conduite commune (35).

46. Dispositif selon la revendication 45, le premier dispositif de séparation étant un décanteur statique ou dynamique ou une centrifugeuse.

47. Dispositif selon la revendication 45 ou 46, la centrifugeuse étant une centrifugeuse à plateau ou une centrifugeuse à décantation.

48. Dispositif selon l'une des revendications 45 à 47, le deuxième dispositif de séparation comprenant un ou plusieurs filtre-presses à membrane ou au moins une centrifugeuse ou un filtre rotatif sous vide.

49. Dispositif selon la revendication 48, la centrifugeuse étant un séparateur à disque ou une centrifugeuse à décantation.
